# EUROPEAN PATENT SPECIFICATION

(11) **EP 1 422 669 B1**
(45) Date of publication and mention of the grant of the patent: **17.12.2008**
(21) Application number: 03028666.0
(22) Date of filing: 07.04.1999
(51) Int. Cl.: G07C 9/00, G06K 9/00, G06F 1/00, G07F 7/10

(54) **Identification confirmation system**
Identifizierungsbestätigungssystem
Système de confirmation d'identification

(30) Priority: 07.04.1998 US 80962 P; 08.06.1998 US 88498 P; 23.11.1998 US 109511 P
(43) Date of publication of application: 26.05.2004
(62) Divisional of application: 99925550.8
(73) Proprietor: Black, Gerald R., Southfield, MI 48076 (US)
(72) Inventor: Black, Gerald R., Southfield, MI 48076 (US)
(74) Representative: Brunner, Michael John

(56) References cited:
- GB-A- 2 109 970
- US-A- 4 562 592
- US-A- 5 103 486

## Description

### FIELD OF THE INVENTION

The invention relates generally to a system for confirming the identification of the identity of a person in a transaction using biometric identification without resorting to credit or debit type cards and, more particularly, to a device and method for replacing credit cards, debit cards, house cards, and check cards as are currently being used.

### BACKGROUND OF THE INVENTION

Credit cards were originally introduced to replace charge-a-plates. Plastic charge cards, debit cards, ATM cards, stored value cards are already outdated and will soon be phased out. It's not uncommon for people to carry more than eight cards in their wallets. The cards must be replaced every few years, and the cards may become damaged with frequent usage. In addition, consumer fraud and card counterfeiting are on the rise. The cards can be easily lost or stolen, signatures can be easily forged and PIN's can be readily determined by criminals. Hence, while plastic cards are easier to carry than money, they are almost as negotiable as money to sophisticated criminals.

Fingerprints offer an infallible means of personal identification. The use of fingerprints for identification dates back many decades. but gained wide acceptance about 100 years ago. Fingerprints are the biometric that form the basis of all worldwide identification. Fingerprints don't change with time while other physical characteristics do. Fingerprint minutiae uniquely identify fingerprints. It's proven that minutiae, were unchanging and repeatable features of each fingerprint, and were individually unique. Each finger has a unique arrangement of ridge detail. Typically, a full fingerprint contains up to 100 points of distinction. A person need only be fingerprinted one time to be in the system.

Everyone is affected by identity theft. Identity theft occurs when a criminal assumes the identity of someone else for the purpose of purchasing goods or services, obtaining funds, or gaining access to private information. Protection from identity theft ensures that (1) one's good name is not damaged, and (2) one's financial resources and personal data are not subject to attack. Today, identification is confirmed by Bank Cards, PIN's and Passwords, Identification Cards, such as a Driver's License, Knowledge of a Social Security Number. All of these can be compromised. The only real deterrent to identity theft is positive user authentication.

Protection from fraud and identity is urgently needed. This is important, not only to ensure that one's good name is not damaged, but also to ensure that one's financial resources and personal data cannot be so easily attacked. While passwords can be easily misplaced or duplicated and must be changed frequently, fingerprints are unique to every individual. Finger minutiae are the essential protection for law-abiding citizens, government and business.

Banks are already moving to counteract check fraud by resorting to fingerprinting customers. A number of major retailers have begun investigating the use of biometric technologies to track employees and other individuals via automated methods of measuring physical attributes or personal traits. Now finger minutiae, an advanced application based on the unique characteristics of the human finger, is drawing increasing attention as a potential weapon in the fight against credit card fraud. MasterCard estimates that finger minutiae technology, implemented on a global scale, could cut industry fraud losses by between 50% and 60% per year. The FBI estimates that credit fraud cost VISA® and MasterCard® $1.63 billion worldwide in 1995. Despite some anticipated advances in security through the use of smart cards and improved encoding, it remains unlikely that security concerns will keep pace with marketing and customer convenience technologies across the broad market. By the year 2000, gross bank card volume is expected to total $9.9 trillion." (American Banker, May 26 1998, V163, N98, P16-1)

Signing a check, approving a purchase, using a credit card, accessing confidential information -- all these activities depend on reliably verifying your identity. Fingerprints are recognized all over the world as positive and undeniable proof of identity, and, unlike passwords that may be forgotten or debit cards that can be stolen, a person always has his fingerprints with him.

U. S. Patent 5,103,486 (Grippi) discloses a combination fingerprint-signature identification system. In this system prisms are used to capture the fingerprint of the index finger while the individual is signing his/her name. The fingerprint image and the signature are processed to form an composite representative for comparison with information shown on a credit card for processing of commercial transactions. While this system combines signature and fingerprint biometrics to confirm identification, the system still requires the use of credit cards, is limited to those two biometrics (index fingerprint and signature), and is limited to the use of optical sensors which are ineffective in commercial settings.

U. S. Patent No.5,680,470 (Moussa et al.) discloses a method of signature verification involving a set of template signatures that are examine for test features which are normalized and irrelevant features are removed. Similarly, U. S. Patent No. (Lee et al.) discloses a system for real time signature verification where the signatures are digitized for statistical analysis and various personal features are selected.

WO 97/43607 describes a device which optically senses the presence and movement of an object in contact with an optically transmissive plate.

Current stylus-type verification systems use accelerometers and pressure sensors to measure stylus pressure and stroke sweep in the users' signature. U. S. Patent No. 5,774,571 (Marshall) discloses a stylus with multiple sensors for biometric verification including grip pressure sensors and gyroscopes. U. S. Patent No.4,513,437 (Chaineret al.) discloses another data input stylus for signature verification which includes accelerometers and pressure sensors. U. S. Patent No. 5,247,137 (Epperson) discloses a stylus that enables biometric identification by means of comparison of graphics data and textural data from a remote location. The stylus also captures strokes and gestures which can also be used for confirming identification.

Even so, confirmation of identification is often slow and tedious at the point-of-sale terminal. Generally, a four-step process is used: (1) the customer swipes the card through a card reader; (2) the bank checks and verifies the status of the cardholder's account; (3) once approved, the cardholder signs his name; and (4) the cardholder's ID is checked by displaying a driver's license or the like.

Fingerprints are the universal identifier, Visa® and MasterCard® are exploring print sensors within screens at point-of-sale terminals and directly on the card. Since the stylus must be grasped to sign one's name and a signature is required in credit transactions, the natural place for the print sensors is within the stylus. A transaction using the system of the present invention requires only that the customer signs the note and the bank approves the transaction. A customer will be thrilled to complete a credit transaction simply by signing his name without using credit cards. The system of the present invention revives an age-old custom of a merchant extending credit on a signature.

What is needed is a system that uses state-of-the-art technology, a system that eliminates the use of all types of personal identification cards, a system that is virtually impregnable to criminals, a system that will significantly reduce transaction time, a system that is universal in virtually all environments, a system that provides maximum safeguards to participating financial institutions, a system that will enable the customer to access his or her funds from any location but will deny access to all others, a system that is convenient to use and unobtrusive to customers, and a system that provides anonymity in many transactions.

What is needed is a means to convert from a card-based commercial transaction system to a cardless commercial transaction system, the means being user friendly, thereafter enabling customers to participate in either system. What is needed is a means for confirming personal identification that is reliable, state-of-the-art, that enables authorized persons entry into their accounts while preventing such entry to all others, while actually discouraging criminals from trying to crack such systems. What is needed is a system that enables a person upon arrival at the complex to register submitting one or more biometric identifiers which are entered and a credit account is established, and thereafter the guest not need carry on his person while within the complex any cash, chips, credit cards, house cards, key-cards, being able to engage in any activities offered within the complex.

### SUMMARY OF THE INVENTION

According to a first aspect of the present invention there is provided a method for conducting a financial transaction according to claim 1.
According to a second aspect of the present invention there is provided a system for processing commercial transactions according to claim 6.

The identification verification system of the present invention offers improved transaction security for financial institutions by virtually eliminating consumer fraud and counterfeiting, offers improved efficiency by streamlining the transaction time (the customer signs name and submits identifier), while offering improved customer convenience by virtually replacing cards in wallets or purses (credit cards, debit cards, stored value cards, pre-paid cards. ATM cards, and the like

The system of the present invention revolutionizes the nature of commercial transactions. Positioned at the center of this system is a biometric stylus. The stylus captures the fingerprints of the index finger and thumb when the customer signs his name. Initially, the customer registers by using the stylus. Each time when the customer signs his name during a face-to-face transactions, the prints are compared against the reference prints to authenticate

Pens with sensors are now beginning to appear at some point-of-sale terminals. These stylus do not capture fingerprints, but rather are used only for purposes of signature verification.

Next, the use of credit and debit cards will become optional. Since the system of the present invention is fully compatible with existing card system, the transition will be smooth. The market for the system of the system of the present invention is all point-of-sale terminals, banks, and government agencies worldwide.

Once the system of the present invention is implemented on a worldwide basis, fraud will be drastically reduced, and customer convenience dramatically enhance. Also, the system of the present invention will be universally accepted like credit cards, will provide customer convenience that cash or credit cards can't even approach, and will provide customer safety that far exceeds cash or credit card systems.

Compaq Computer is now selling computers with print sensors in their keypads. Instead of entering a PIN or a Password to access a computer network, the user puts his finger onto a glass lens the size of a postage stamp. The fingerprint is photocopied and compared to thousands of other prints. The process takes less than a second and the sensor costs under $100. Similarly. Identix has developed a fingerprint system that produces forensic-quality tenprint records, and Veridicom, has developed advanced software and hardware components using Bell Labs patented fingerprint authentication technology. The system of the present invention incorporates a pair of these type sensors into a stylus used for signing a promise to pay.

Banks benefit as credit card fraud is reduced at least fifty percent. The system of the present invention virtually ensures that only someone with matching prints will have access to the account. The bank controls the transaction, capturing and processing as much biometric data as necessary before deciding whether to approve. Merchants and customers also benefit from reducing credit card fraud since some of the costs are passed onto them. The system of the present invention assists law enforcement in identifying and apprehending criminals. Criminals are discouraged since anyone trying to access an unauthorized account is identified immediately. Merchants benefit as transaction time is minimized. The system automatically captures the print data when the customer signs his name and processing begins immediately. Customers benefit since they no longer need to carry cards. Cards are easily lost or stolen. signatures are easily forged and PIN's are readily determined by criminals. While cards provide a useful alternative to cash, they are now almost as negotiable as cash to sophisticated criminals. The system of the present invention provides optimal safety for the customer by eliminating the need to carry all credit cards, debit cards, ATM cards, stored value cards, and pre-paid cards in a wallet or purse. At point-of-sale terminals, cardholders will have the added convenience of being able to (1) continue using their cards, (2) use the system of the present invention, exclusively; or (3) use both interchangeably.

Registration using the system of the present invention is similar to opening a new bank account. The applicant provides the bank with basic information; name, address, phone number, and signature. The only difference is that the stylus of the present invention enables the capture of fingerprint data while the applicant signs his name. Another way to register at point-of-sale terminals, is to replace styluses currently used for signature verification with the biometric styluses of the present invention. Once the prints are initially captured, the card isn't needed. The next time the cardholder wants to access the same account he need only sign his name. Of course, the cardholder can also continue to use the card.

The account is accessed at any point-of-sale terminal. The person signs his name using a biometric stylus of the present invention that's identical to the stylus used during registration. The prints are again captured and compared to the prints of all registrants in search of a match. Once the bank confirms that there are sufficient funds in the account, the amount is debited from the account, and the transaction is approved. That's all there is to it!

A cardholder can transfer funds into a new account at a point-of-sale terminal by use of a credit card at a point-of-sale terminal by using the stylus of the present invention. The cardholder swipes his card through the cardreader and signs and prints his name using the stylus of the present invention. The prints are captured and the cardholder advises the credit card bank of the amount to be transferred. Account information is exchanged and the card is not needed next time.

A debit variation of the system of the present invention provides improved customer convenience for debit, pre-paid, and stored-value type transactions. No credit is extended to the customer, who pays for his account in advance. This variation opens the financial system to everyone, regardless of credit rating, class. or legal standing. The customer does not need bank affiliation, since the account is assigned to a system bank if none is designated.

The debit variation is initiated at any point-of-sale terminal, ATM, or bank by transferring cash, checks, money order, or credit cards into the account. Since credit is not being extended to the customer, less information is needed. Registration occurs directly with a bank. or with the stylus of the present invention during a debit transaction at a point-of-sale terminal (similar to the system of the present invention). The debit variation also provides anonymity in certain types of transactions. When the size of the participating group is limited, such as in a closed environment (hotel, amusement park, etc.), a stylus can be used without the fingerprint sensors. If the customer selects a pseudonym, authentication is confirmed by the signature and the other biometric sensors in the stylus. Absolute identity is protected without the prints and without disclosing a true identity.

Many retail outlets no longer accept checks because of fear of forgeries. A check confirmation variation of the system of the present invention provides the perfect way to authenticate identification at a point-of-sale terminal. The customer registers with the Biometric stylus of the present invention when opening his checking account. When writing a check, the bank is identified and approves the transaction. The system also ensures against overdrafts. Signature verification for checks is an added benefit for point-of-sale terminals that provide the system of the present invention. This check authentication program can also replace conventional checks.

The system of the present invention is particularly useful in a closed environment, such as a hotel, casino, theme park, library, university campus, cruise liner, military base, prison, sports complex, that are limited as to geographical area or as to services provided or both. Once enrolled into the cardless transaction system of the present invention, any guest upon registration with the hotel complex has full and complete access to any amenity within the complex, at anytime, without carrying on his person anything other than biometric identification that is inherent in his being.

The system of the present invention comprises biometric registration upon entry into the complex, biometric access to a guest room, biometric play of slot machines, biometric play at gaming tables, and biometric purchases on-site within the complex such as restaurants, lounges, boutique shops, and the like.

A guest to register upon registration with the hotel complex confirms his identity upon arrival and check-in selects an amount to be entered into a credit account, enters biometric identifiers that are to be used on-site during his stay. Thereafter whenever the guest seeks access to his room or access to the credit account, identification is confirmed by matching the biometric identifiers and the guest can participate in amenities offered within the complex. The biometric identifiers are preferably prints of the index finger and thumb and are sensed by means of a stylus. The stylus is preferable a stylus which has a special sensing grip to fit the hand and enable a good reading of the thumb and index finger. The grip is transparent. The stylus is preferably portable and includes a sensor an optical or imaging print sensor. Once read, the signals of the prints are transmitted for processing. The guest can add value to his account at terminals throughout the casino.

The cardless transaction system also enables room access to a guest suite when the guest grasps a door handle and rotates the handle, identification being confirmed once the door handle is grasped. Most hotel rooms have a latch-type door for room access. When the guest wants access to his room, he grasps the latch handle with his thumb in a preset location, generally the top of the cylinder attaching the latch portion to the door. He applies pressure to the latch portion and the thumb print is read by an optical sensor. The computer seeks a match the thumb print of the person who has registered access to the room. If identification is confirmed, room access is enabled.

The system enables a player to engage any slot machine on the premises purely by biometric means. A lever-type slot match operates similar to the latch-type hotel door described above. The player grasps the handle and pulls it forward, the thumb being placed on a preset location on the lever. If the slot machine is of the push button variety, the player requests play at the machine by pressing the push button. An optical sensor reads the print and seeks a match with all registered prints in the system. Once identification has been confirmed, and the available credit balance in the player's credit account is sufficient to cover the play, play is enabled. The biometric identifier ensures that the player making late wager is the player to whom access to the credit account is enabled. The biometric identifier prevents any unauthorized The playing value saved within the computer system is made available to the player once identification has been confirmed. If the player wins, the credit balance is increased and if the player loses the credit balance is decreased.

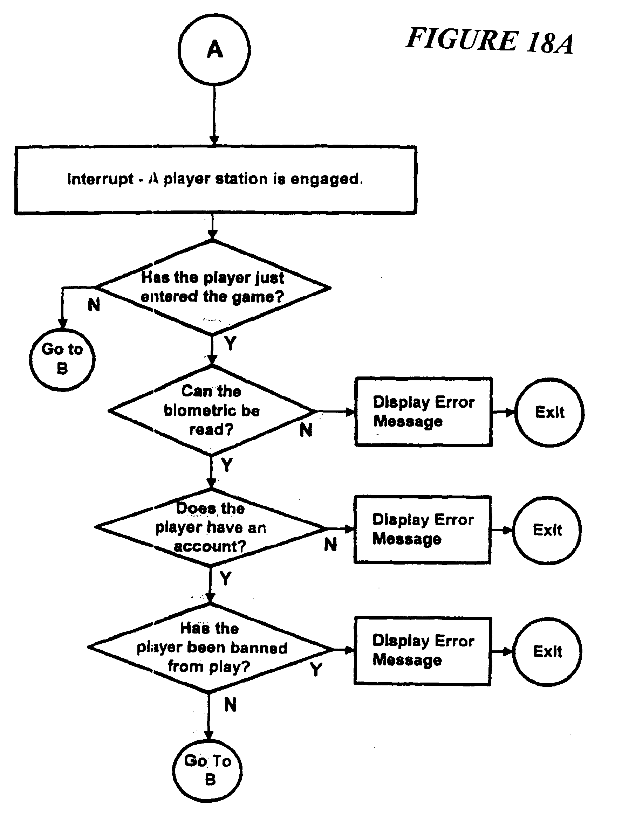

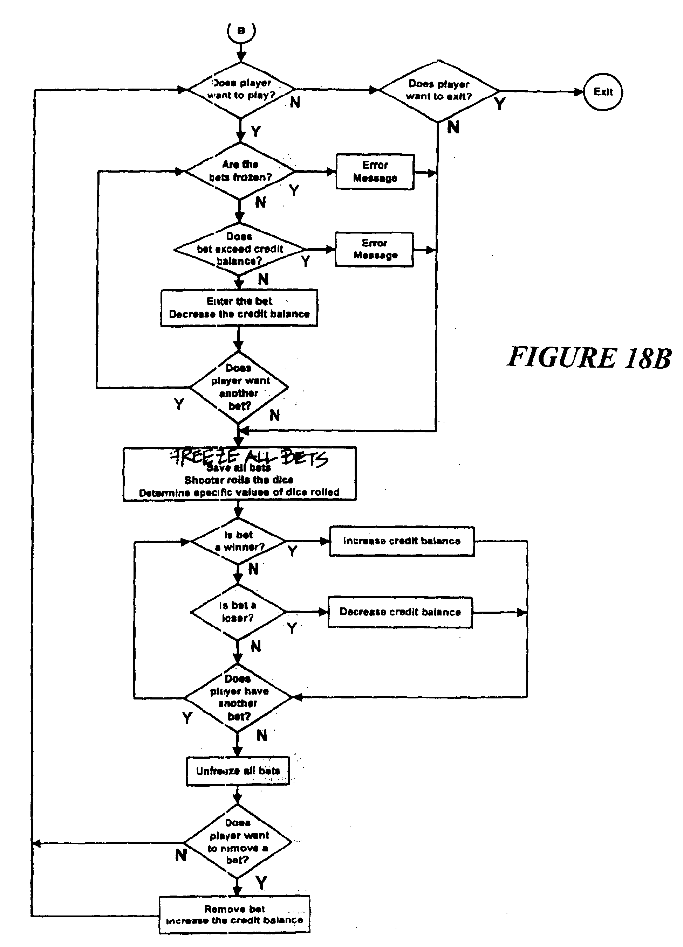

The system enables a player to participate in any table game on the premises, either while at the table or from a remote location. While the principles of the present invention are applicable to all games played within a casino (such as roulette, craps, baccarat), reference in this specification is made primarily to blackjack for purposes of illustration only. The player requests access to his credit account by pressing the push buttons on the player station. An optical sensor reads the print and seeks a match with all registered prints in the system. Once identification has been confirmed, and the available credit balance in the player's credit account is sufficient to cover the play, play is enabled. If the player wins, the credit balance is increased and if the player loses the credit balance is decreased. Identification is confirmed prior to each hand by biometric means. FIGURES 18A and 18B disclose a simplified logic diagram for enabling craps play in a biometric manner.

The system enables a guest to make any on-site purchase, at a restaurant, lounge, boutique shop, or the like and access the credit balance registered with the complex. The guest grasps a biometric stylus similar to the implement used at registration to enter the print of the index finger and thumb. An optical sensor reads the thumb and index-finger print from the implement and seeks a match with all registered prints in the system. Once identification has been confirmed, and the available credit balance in the guest's credit account is sufficient to cover the purchase, the purchase is made and the credit balance is decreased by the amount of the purchase..

The system is also applicable to resort hotel complexes that do not include slot machines, tables gaming, and other type of gambling activity. Similarly, the principles of the present invention are also applicable to standalone casinos that do not have guest rooms. Registration can occur for a standalone casino either off-site with pre-authorized third parties or with the casino.

For a more complete understanding of the identification confirmation system of the present invention, reference is made to the following detailed description and accompanying drawings in which the presently preferred embodiments of the invention are shown by way of example. As the invention may be embodied in many forms it is expressly understood that the drawings are for purposes of illustration and description only, and are not intended as a definition of the limits of the invention. Throughout the description, like reference numbers refer to the same component throughout the several views.

### BRIEF DESCRIPTION OF THE DRAWINGS

FIGURE 1 discloses a preferred embodiment of a functional block diagram of the identification confirmation system of the present invention:
FIGURE 2A discloses a writing stylus with fingerprint sensors for use in the system of the present invention with a built-in grip;
FIGURE 2B discloses a section of the writing stylus shown in FIGURE 2A taken along 2A-2A;
FIGURE 3A discloses a preferred embodiment of the writing stylus with grip for use in the system of the present invention with a built-in grip;
FIGURE 3B discloses the print images obtained from the print imaging sensors in the writing stylus of FIGURE 3A;
FIGURE 4A discloses an assembly view of a conventional ball-point stylus with a grip in combination with a digital surface for use in the identification confirmation system of the present invention;
FIGURES 4B, 4C, and 4D disclose various grip configurations which provide alignment of the print sensors with the index finger and thumb;
FIGURES 5A, 5B, 5C, 5D, and 5E disclose various grip configurations that are compatible with conventional styluses and pencils. the grip including a cord connection to the writing surface. and sensors being incorporated into the grip;
FIGURES 6A and 6B disclose a simplified logic diagram of one embodiment of the identification verification system of the present invention for registration;
FIGURES 7A and 7B disclose a simplified logic diagram of one embodiment of the identification verification system of the present invention when used in a transaction;
FIGURES 8 discloses a simplified logic diagram for conversion of a credit card to a card less commercial transaction system for use with the identification verification system of the present invention;
FIGURES 9 discloses a payment selector used by a customer to select which account the transaction is to be paid from in another variation of the identification confirmation system of the present invention;
FIGURES 10 discloses a keypad for use with a digitizing surface to enable data entry such as a primary identifier for use with the identification confirmation system of the present invention;
FIGURE 11A is a functional block diagram disclosing a block diagram configuration of the system of the present invention for use in a closed environment (a hotel-casino) replacing conventional house cards and room keys;
FIGURE 11B is a functional block diagram disclosing a block diagram configuration of the system of the present invention for use in another closed environment (a stand-alone casino) replacing conventional house cards and room keys;
FIGURE 11C is a functional block diagram disclosing a block diagram configuration of the system of the present invention for use in yet another closed environment (a hotel-resort) replacing conventional house cards and room keys;
FIGURE 12A is a functional block diagram disclosing a block diagram configuration of the primary components for the system of the present invention for use in the hotel-casino of FIGURE 11A - biometric registration, biometric room access, biometric gaming, and biometric on-site purchases;
FIGURE 12B is a functional block diagram disclosing a block diagram configuration of the system of the present invention for use in a stand-alone casino of FIGURE 11B- biometric registration, biometric casino gaming, and biometric on-site purchases;
FIGURE 12C is a functional block diagram disclosing a block diagram configuration of the primary components for the system of the present invention for use in a hotel-resort of FIGURER 11C - biometric registration, biometric room access, and biometric on-site purchases:
FIGURE 13A through 13D disclose one embodiment of a simplified a schematic flowchart for a logic sequence for a roulette game showing the gaming system from initial clearance for a player to final withdrawal of the player from the game for use with the systems of 11A and 11B;
FIGURE 14 discloses a keypad for playing roulette using the system of FIGURES 11A and 11B;
FIGURE 15 discloses a door latch for use in hotels and motels that adapts a door latch with a print sensor for the thumb as placed on the latch handle, identification being verified as the door is grasped for purposes of entry use with the systems of 11A, 11B, and 11C;
FIGURE 16 discloses a gas pump equipped with print sensors for the thumb and fingers for use in a commercial transaction where the customer need not face the cashier to pay for the gasoline, identification being made as the tank is being filled;
FIGURE 17A is a schematic representation of a first preferred embodiment of an optoelectronic system for enabling a fingerprint to be read for use in the biometric management system of the present invention;
FIGURE 17B is a schematic representation of a second preferred embodiment of an optoelectronic system for enabling a fingerprint to be read for use in the biometric management system of the present invention;
FIGURES 18A and 18B disclose one embodiment of a simplified schematic flowchart for a logic sequence for a craps game showing the gaming system from initial clearance for a player to final withdrawal of the player from the game;
FIGURE 19A discloses a simplified logic diagram enabling guest-room entry for the biometric latch or door knob for the biometric management system of the present invention;
FIGURE 19B is a preferred embodiment of a functional block diagram of a guest room key security system for use with system shown in FIGURE 11C: and
FIGURE 20 discloses another preferred embodiment of a process flow path for identification verification using the biometric identification system of the present invention.

### DETAILED DESCRIPTION OF THE PREFERRED EMBODIMENTS

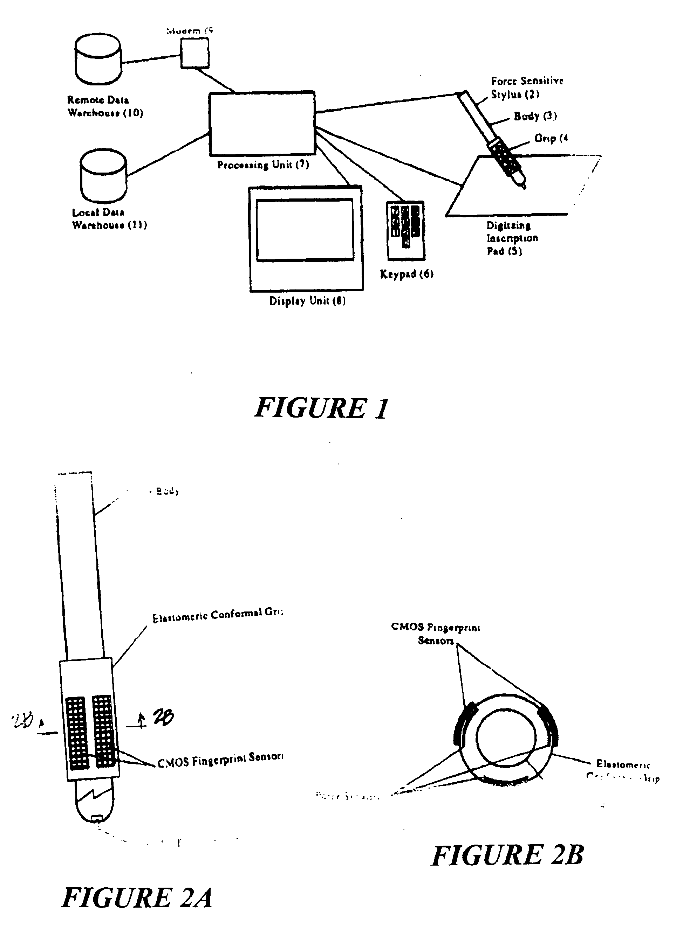

Referring now to the drawings, in the broadest terms the preferred embodiment of the identification confirmation system of the present invention as shown in FIGURE 1 comprises a stylus 2 with fingerprint sensors disposed in a grip 4. a digitizing inscription pad 5, a keypad enabling data entry 6, a digital display unit 8. and a processing unit 7.

The stylus 2 includes sensors that capture biometric properties of the signer. The processor 7 processes the captured information to determine whether to allow access to an account, or other entry or privilege once identification has been confirmed, In one preferred embodiment, the system includes means to enable the signer to enter a primary identifier, the identifier being a series of letters, digits, a spoken word convened to text (speech recognition), or the like. The primary identifier is the signer printed name, the signer's birthday (and year), zip code, mother's maiden name, or PIN or password.

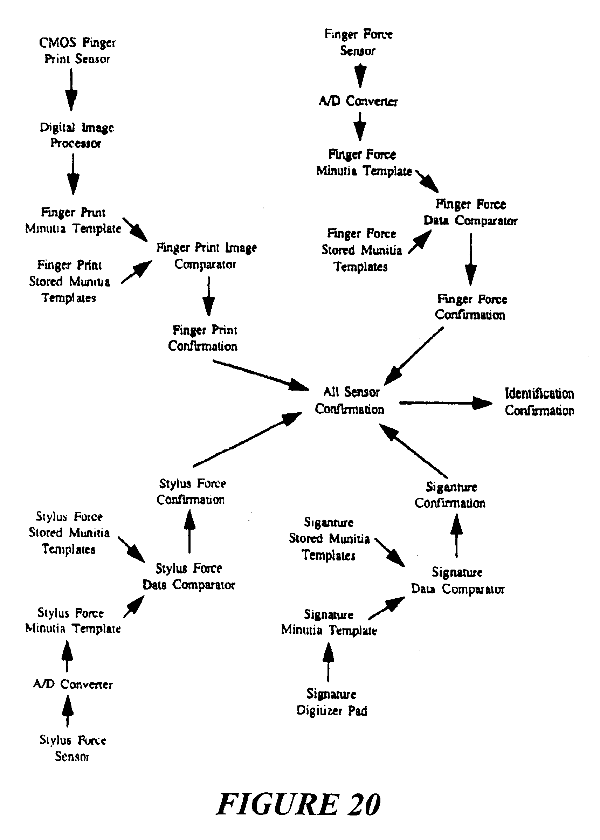

The biometric stylus 2 of the identification confirmation system has print imaging sensors in the grip 4 to sense the index fingerprint and thumb print, in addition to other biometric sensors including but not limited to the following: pressure sensors (point and grip); accelerometers; gyroscopes; position of index finger relative to point; position of thumb relative index finger. FIGURE 20 discloses a simplified logic diagram where multiple biometric sensors are used to determine account confirmation.

The biometric stylus 2 of the identification confirmation system of the present invention has print sensors positioned within the unique grip 4 (see FIGURES 2A and 2B). Electronic images of the index finger and thumb are extracted during use. Thereafter, the customer uses a similar stylus to submit a set of prints for comparison with the set of prints of the authorized user - the prints either match or don't match. The use of two prints makes a mistake highly unlikely. The stylus 2 thwarts forgers since even if the signature is the same the prints are not (the content of the writing is unimportant). The stylus 2 is provided by banks, POS terminals, and government agencies worldwide. The principles of the biometric stylus 2 are combined with other biometrics housed within the stylus 2 to provide near perfect confirmation. Digital systems evaluate the fingerprint by comparing the similarity, number, and unit relationship of the points of distinction.

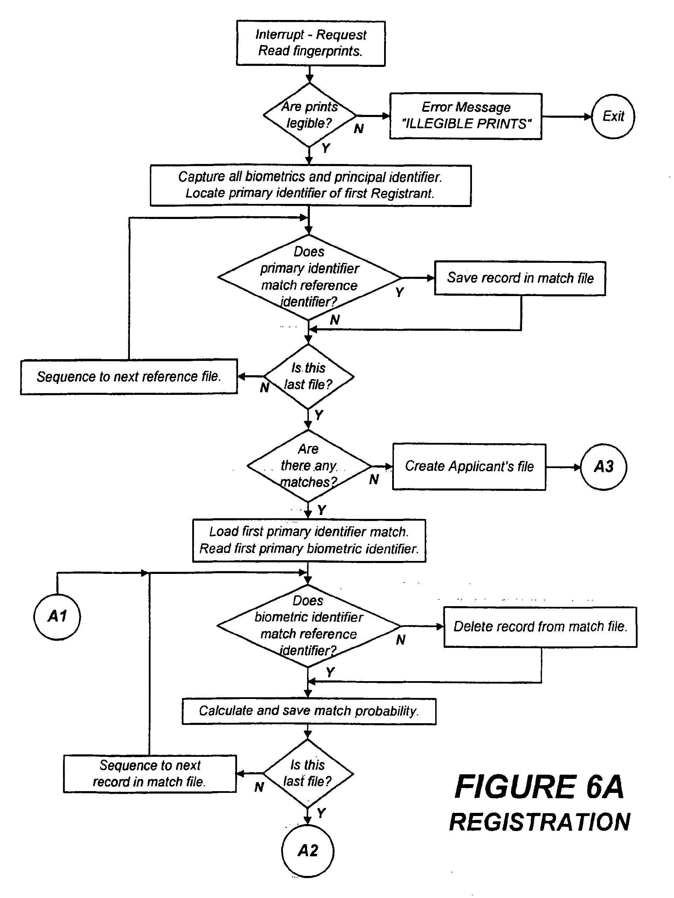

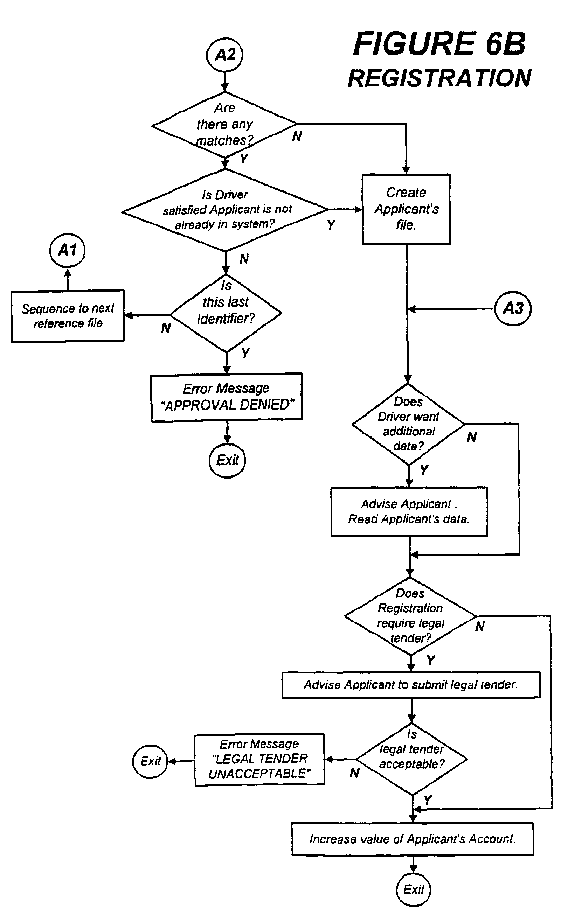

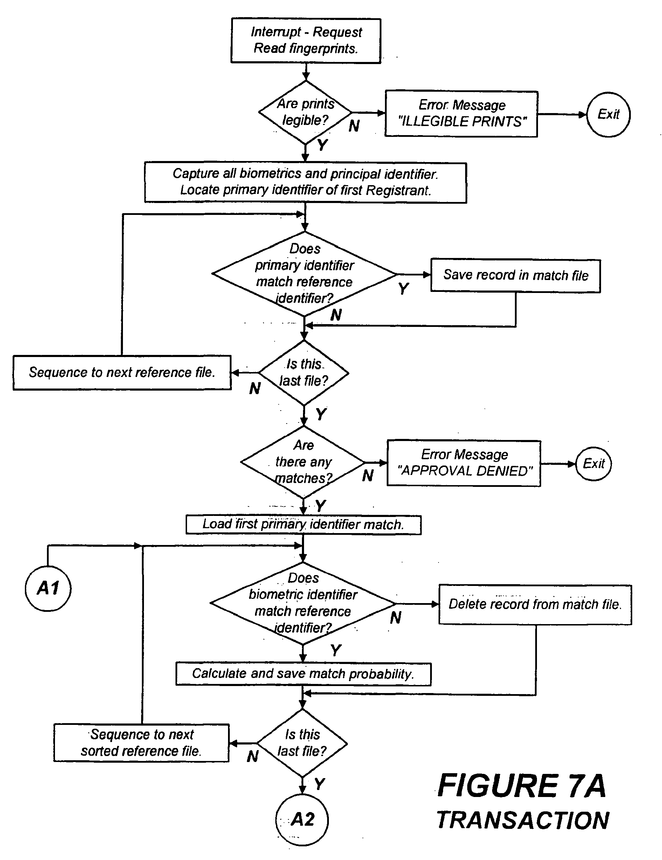

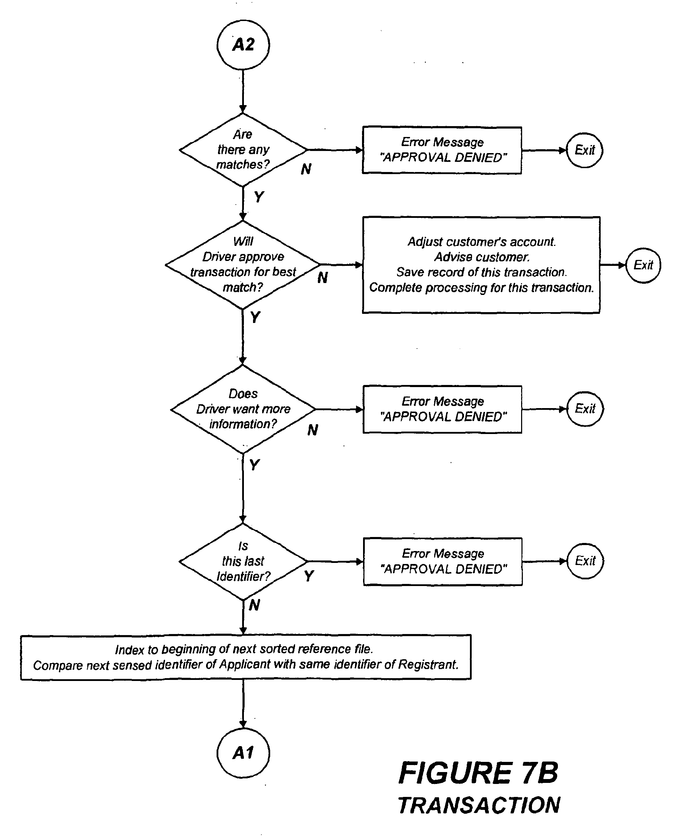

FIGURES 6A and 6B disclose a simplified logic diagram for registration with the identification confirmation system of the present invention. The customer initially registers with a bank or point-of sale terminal by signing his name with a special identical stylus 2 and exchanging legal tender to open the account. The account can be a debit account, a savings account, a checking account, or even a credit account. Much more information is needed if the customer seeks credit. Later when the customer wants to access the account to pay for goods or services, be signs his name with an identical stylus 2. Whenever the customer wants to access the credit account at a point-of-sale transaction, an identical stylus 2 is used, the customer signs his name, and the computer searches through the appropriate files for purposes of comparison (see FIGURES 7A and 7B).

In still another preferred embodiment of the identification confirmation system additional biometric sensors are periodically added to the stylus 2 to provide the financial institution with all information that is necessary. So long as the additional sensors do not affect the weight or balance of the stylus 2 so that fingerprint and signature biometrics are altered, no harm is done.

When registration occurs at someplace other than a financial institution, such at a point of sale terminal, the customer pays legal tender to the merchant (a pre-paid or stored value type of account) who in exchange opens an account for the customer. The financial institution is the one affiliated with the merchant, thereby enabling the customer to open an account without ever having any bank affiliation. Such an account can be one where the customer opts not to use fingerprints and selects a pseudonym for purposes of privacy as hereinafter described.

The biometric identifiers are preferably prints of the index finger and thumb and are sensed by means of a stylus 2. The stylus 2 is preferable a stylus 2 which has a special sensing grip 4 to fit the hand and enable a good reading of the thumb and index finger. The grip 4 is transparent. The stylus 2 is preferably portable and includes a sensor an optical or print imaging sensor. Once read, the images of the prints are captured for further processing. In one preferred embodiment, the biometric stylus 2 includes temperature sensors for purposes of activation. The sensors are well known in the art and are similar to the heat sensors found in elevators, the heat from the hand engaging the system.

In another embodiment, the point of the stylus 2 is a conventional fountain pen 2 that ensures that the orientation of the stylus 2 is aligned with the print sensors disposed within the stylus 2. Preferably, a print sensor is disposed on the top surface of the stylus 2 and two additional sensors are disposed on the adjacent side surfaces of the stylus 2. This ensures repeatability of print images sensed.

For a right-handed person, the index finger is aligned with the point and the thumb is positioned on the stylus surface abutting the left-side of the stylus top surface. For a left handed person, the index finger is aligned with the point and the thumb is positioned on the stylus 2 surface abutting the right-side of the stylus top surface. By capturing and comparing the index finger and thumb print of the applicant with the reference finger and thumb print, the likelihood of an error becomes highly unlikely. In the event that a biometric stylus 2 or grip 4 is not available, manual backup enables conventional identity confirmation. Accordingly, sensors are positioned within the stylus 2 to read each of these prints.

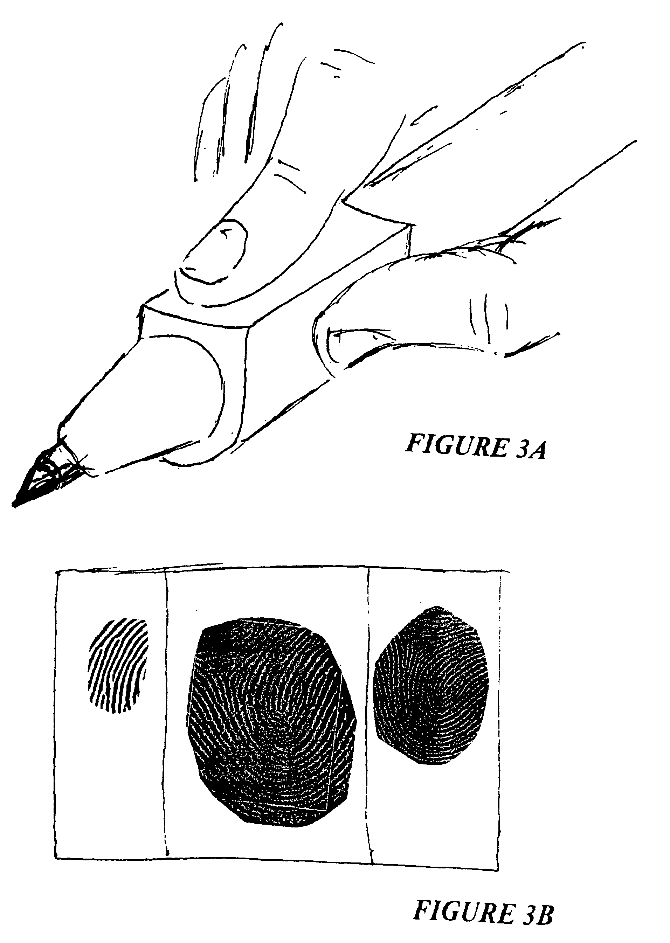

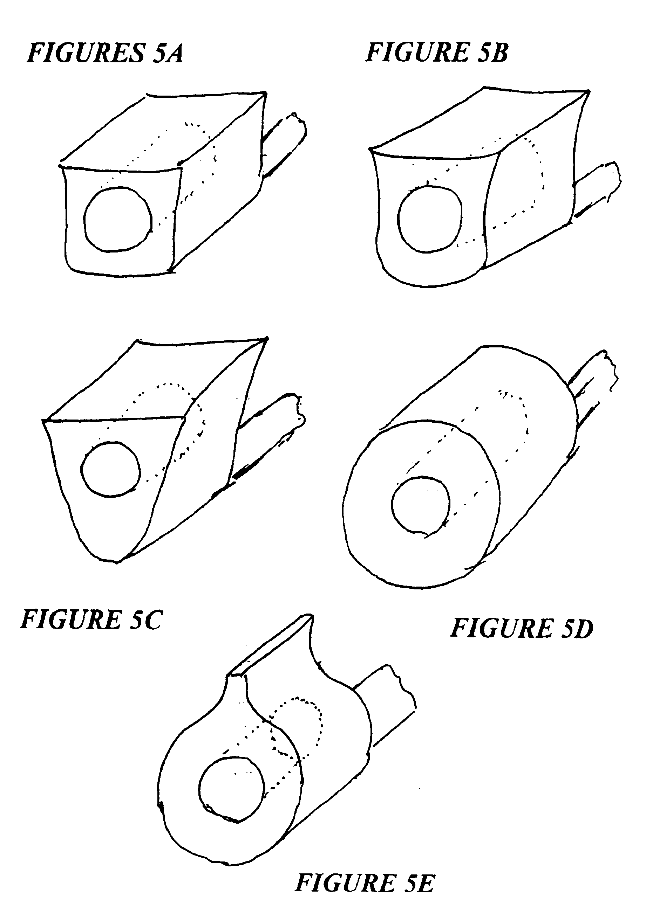

The stylus 2 has a special sensing grip 4 to fit the hand and enable a good reading of the prints of the index finger and the thumb. The cross-section of the stylus 2 is generally rectangular with rounded corners, and the print surfaces for the thumb and index finger are slightly recessed and concave. FIGURES 5A, 5B, 5C, 5D, and 5E disclose various preferred embodiments of grip configurations that are compatible with conventional styluses and pencils. the grip 4 including a cord connection to the writing surface, and sensors being incorporated into the grip 4. FIGURE 5E shows a teardrop configuration with the seam pointing upward. The applicant points the seam upward and places his index finger on one side of the seam and his thumb on the other side of the seam. This embodiment assures that only two sensors are needed whether the applicant is right or left handed. Also, the combination concave-convex shape enables a larger portion of the two prints to be sensed by the print imaging sensors. FIGURES 3A and 3B disclose a U-shaped grip 4 and the images captured therefrom with the sensors.

In one variation, the biometric stylus 2 is attached to a surface or counter by means of a plastic coated hollow tube, containing fiber optic cable therewithin. It is through the fiber optic cable that the print images are transmitted to the processor disposed within the surface or counter. The sensors are disposed within the stylus 2. In another variation, the biometric stylus 2 is portable. While the sensors are also disposed within the stylus 2. the signals of the prints are transmitted to the processor for conversion and storage. The prints of the thumb and index finger are preserved in the systems processor for as references for subsequent comparisons. The goods and service providers have a similar stylus 2 which is used by the guest to confirm identification and access the credit account.

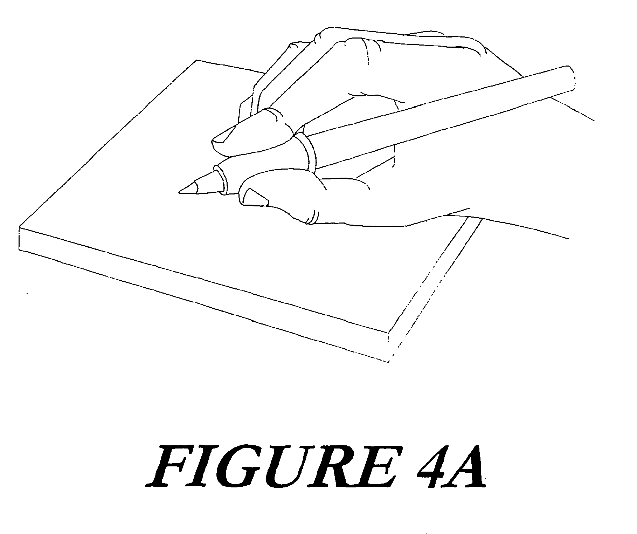

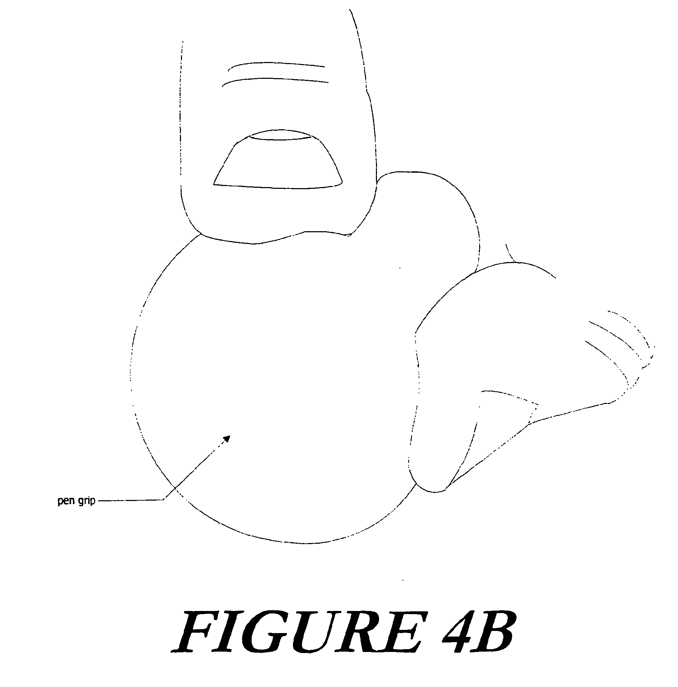

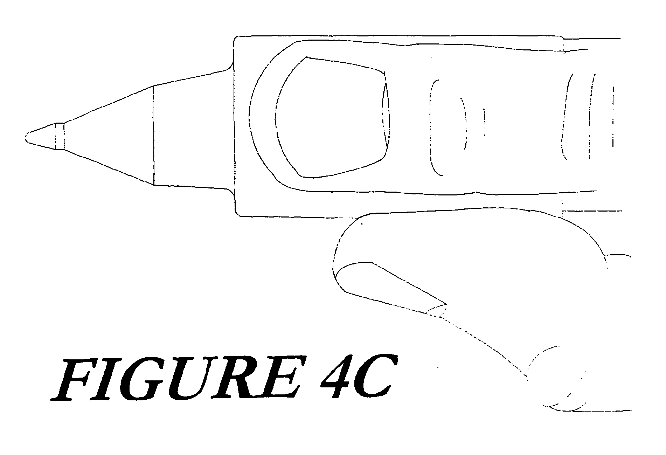

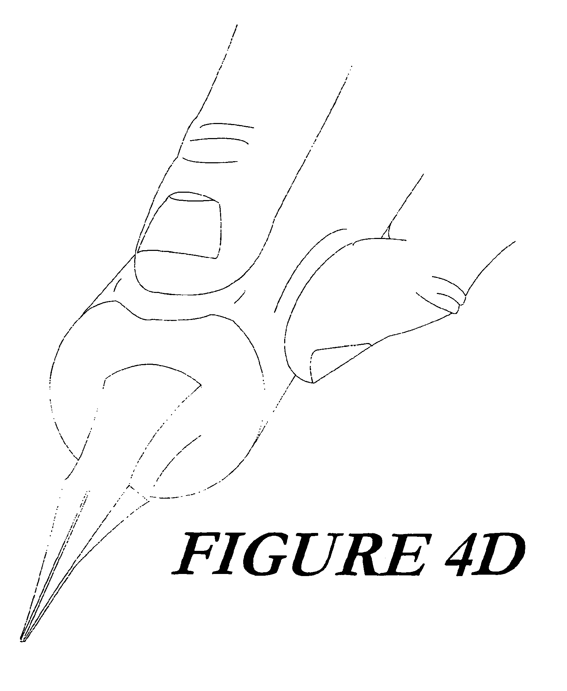

In another embodiment a grip 4 is provided that is compatible with conventional styluses and pencils, the print imaging sensors being positioned within the grip 4. The grip 4 is symmetrical and preferably has a cubical shape with concave sidewalls. A power cord is affixed to the grip 4 to provide power to the sensors and also to prevent theft. If the stylus 2 wears out or breaks down, it can be readily replaced with another conventional stylus, at a modest cost. Also, by having standard grip sizes, any problem with using biometric styluses of differing sizes which might change some of the properties of the biometrics are eliminated. The grip configurations are designed to provide as good a reading as possible of as much of the index finger and thumb print as possible. Certain preferred embodiments include concave cubes (see FIGURE 4C), an enlarged cylindrical chamber section (see attached drawing). The grip 4 is preferably transparent and is designed to be self-aligning, that is, the customer must grasp the grip where the sensors are located to use the stylus. FIGURE 4B is self-aligning using a lip that eliminates the need for a third senor to accommodate both left and right-handed people. FIGURE 4D discloses a fountain pen type stylus which is self-aligning because of the orientation of the pen tip.

While the power unit of the stylus 2 can be incorporated into the body of the stylus 2, the stylus 2 is preferably not portable, and includes a power cord that is affixed to the tablet counter to prevent theft. The stylus 2 includes a print imaging sensor configuration, as the signals of the prints are transmitted for processing. The fiber optic cable transmits print images to a processor. The processor is in the surface/counter. The stylus 2 includes a sensor configuration.

For transactions involving a larger pools of potential customers, processing strategies are needed so that the system does not need to continually process millions of files to confirm the identity of the customer.

One main purpose of a credit-type card is to provide a primary identifier for file searching purposes. When the system of the present invention has widespread global acceptance, it will become necessary to distinguish the customer from hundreds of millions of other people. It is not practical to have the driver search such numbers of records for each transaction.

The primary identifier in a conventional credit card transaction is any one of the following: the imprinted name; the imprinted PAN; or the information stored in the magnetic stripe (smart card).

To replace a card, the replacement system also preferably includes at least one primary identifier. Examples of primary identifiers comprise birthday (6 digit code), zip code, PIN, or printed name. There is a preference for numerical data because of language and translation problems. since Arabic numbering is essentially the global standard.

Certain basic strategies are needed. Since the fingerprints enable determination of whether the customer is right or left handed. records of people that don't match the hand of the customer are discarded immediately during processing. In one preferred embodiment. the signature is the first biometric processed (when fingerprints are not used). Writing styles that are dissimilar enable almost all registered files to be rejected. The print of the index finger and thumb are the next biometrics used. If either or both cannot be read, the customer is so advised and the transaction is rejected. If the prints are of good quality, each is checked as against the remaining records in the pool of registered records. The prints of each transaction are preserved and used to develop an improved composite of the customer's prints for subsequent transactions.

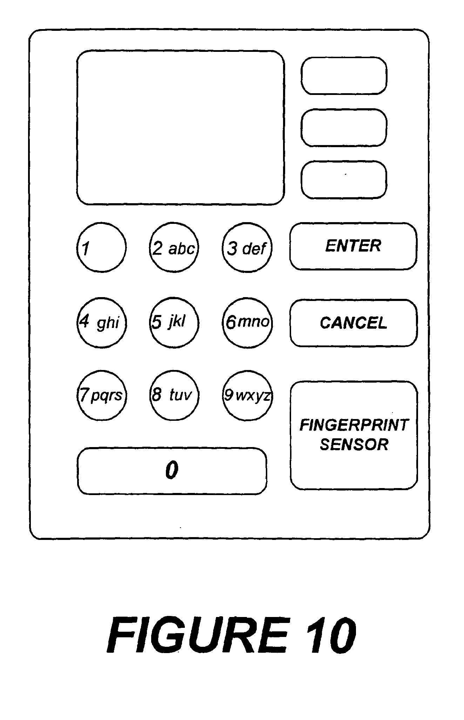

In one preferred embodiment, a numerical is used (see FIGURE 10) to streamline the confirmation process. The customer enters a zip code or perhaps a PIN which is checked prior to the signature. The zip code is preferred in instances where the clientele is national or international, whereas a PIN is preferred for instances where the transaction is regional.

There are two basic type of card transaction that the principles of the identification system of the present invention are of particular applicability to:
Credit transactions where the customer needs to identify himself/herself so that the institution can determine credit status for purposes of advancing credit. It is critical that exact identity be made at time of registration so that credit histories can be properly accessed and analyzed; and
Prepaid or stored value type of transactions where the customer has deposited an amount of money for subsequent use.

In one preferred embodiment of the present invention, the exact identity of the customer can be withheld in prepaid or stored-value transactions. In one preferred embodiment of the present invention, the stylus 2 includes an on-off switch. In the off position, the fingerprint sensors are not used, so that the confirmation is done without sensing the fingerprints. In this embodiment, the signature becomes the primary biometric. If the customer signs a pseudonym rather than his regular name, withholding his actual name, the system processes the transactions without knowing the customer's actual name or his prints. As long as the pseudonym is used to access the account, anonymity is assured while using the identification system of the present invention.

The same result can be achieved by having two separate styluses, (1) a stylus 2 which includes print sensors for transactions where privacy is not the primary concern: and (2) a stylus 2 without print sensors for stored value or prepaid accounts. In yet another preferred embodiment, the print sensors are incorporated in the grip 4, and the grip 4 is removed when the fingerprints are not to be used. The only thing that is necessary is that the individual be able to access his account. so that the system provides near perfect repeatability. Of course the customer will need to remember the alias used to access the account. This is particularly attractive feature to those people with concerns about individual privacy, since they may participate in blind transactions while using the stylus 2. The customers can obtain print-outs of monthly statements by going to a special terminal and verifying his identification with a biometric stylus 2 and thereafter requesting such information.

Transactions where the pool of potential customers is under 50,000 people include closed environments like resorts, hotels, colleges, dormitories, theme parks, prisons, cruise liners, and the like. For this volume of registrants, the primary identifier is not needed, but if used, does improve transaction time and system efficiency somewhat.

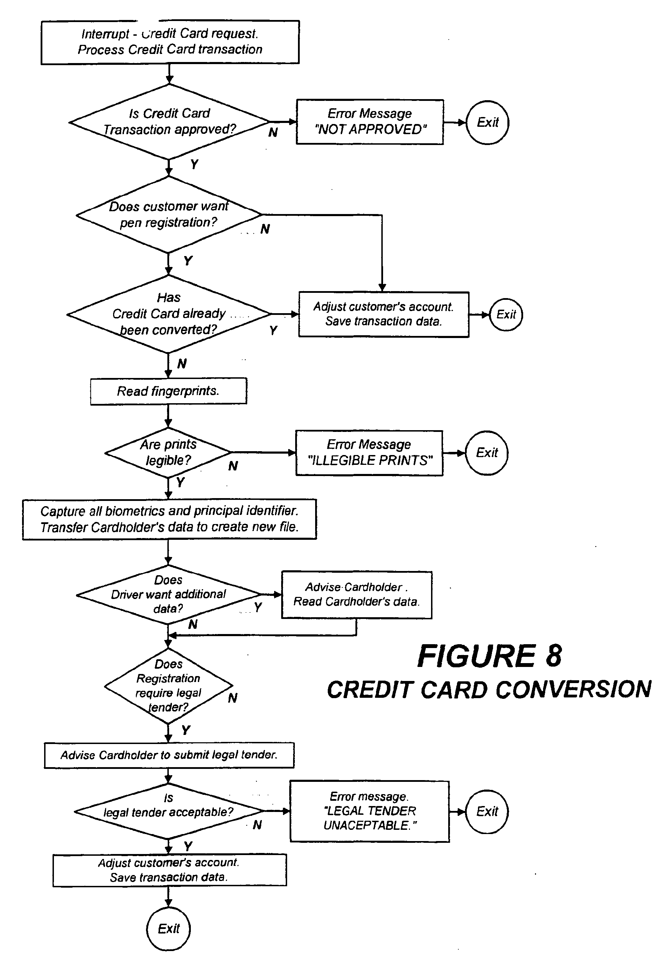

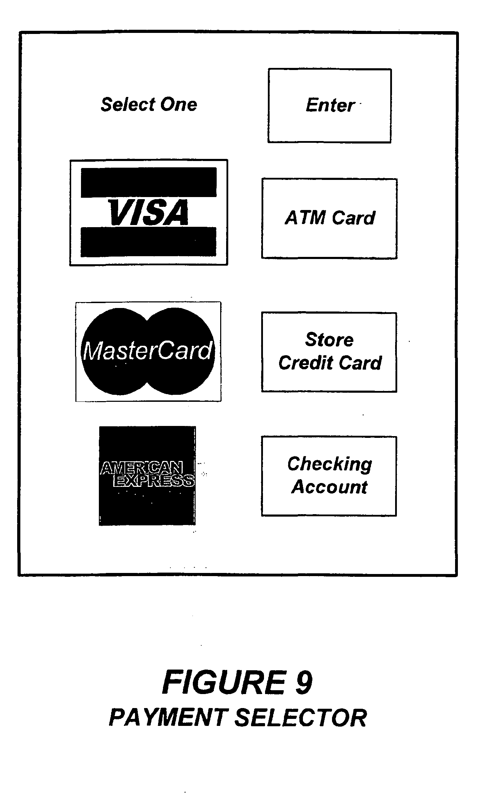

The identification confirmation system enables a credit card holder to convert the account to use with the biometric stylus 2 (see FIGURES 8 which discloses a simplified logic diagram). The conversion process enables the cardholder to conduct transactions with the stylus 2 or by presenting the card. Upon signing with the stylus 2, the driver accesses the card record for the cardholder and creates a duplicate record in the verification system. Thereafter, the cardholder transfers legal tender from his card credit balance to the new account. If all of the available balance is transferred over, the credit card is destroyed. FIGURES 9 discloses a payment selector used by a customer to select which account the transaction is to be paid from in another variation of the identification confirmation system.

A credit cardholder can also set up a new account at a point-of-sale terminal by use of his card. The cardholder swipes his card through a cardreader and signs and prints his name using the biometric stylus 2. The biometrics are captured and the cardholder advises the credit card bank of the amount to be transferred to the new account. Account information is exchanged and the card is no longer needed.

A variety of digitizing inscription pads are known in the art. U.S. Patent 5,652,412 (Lazzouni) discloses an apparatus for reading and storing coordinate information representative of the instantaneous position of a stylus on a writing surface. The system provides a writing paper having a prerecorded pattern of pixels, each pixel containing encoded location information which identifies an absolute and unique coordinate location on the paper. The system enables the simultaneously recording of written information on encoded paper and for recording the wrinen information in a memory. Other digitizing inscription pads can be found in U.S. Patent No. 5.051.736 (Bennett et al.): U.S. Patent No. 5.477,012** (Sekendur): and U.S. Patent No. 4.688.933 (Lapeyre) Also. U.S. Patent No. 5,263,742 (Koch) discloses a fingerprinting system where the print is developed by making a copy on a sensitized surface by back reflecting radiant energy through an adhesive where the print is imaged. Similarly, U.S. Patent No. 5,709,746 (Ballard) discloses a self-contained fingerprint kit.

While the biometric stylus 2, signature, and other biometrics that can be captured by the combination stylus 2 and digitizing inscription pad are sufficient to distinguish the customer from hundreds of millions of others, an efficient search strategy is needed.

While there has been considerable development of technology of improved sensing systems for signatures, the signature is not and probably never will be the biometric of choice since handwriting and signatures change with time and every with each writing such that a match with perfect confidence is not possible. However, the signature is needed for legal purposes, so that it will always be needed to include some sort of signature verification into any identification system. The signatures of each transaction are preserved and used to develop an improved composite of the customer's signature for subsequent transactions.

The biometrics needed are all provided by the stylus 2. The primary biometric is the print of the index finger, and the thumb print being the other primary biometric. Some examples of secondary biometrics comprise the signature, stylus point pressure, stylus grip pressure, accelerometers, gyroscopes, position of index finger, position of thumb relative to index finger.

Also, a timer is extremely useful in measuring biometrics associated with signature. The timer is useful in determining acceleration and deceleration, the time needed to sign the name, the time spacing that the stylus 2 is lifted from the digital surface, and first name time, middle initial time, and last name time.

Alphanumeric data for the primary identifier can be provided by (1) a digitizing inscription pad, (2) a mouse and CRT, (3) a touch sensitive CRT, (4) voice and speech recognition, and (5) a keypad embedded in the writing surface.

In applications where higher populations are involved, one preferred embodiment includes more than one primary identifier in the event that approval is denied, that the another search can be initiated for backup purposes.

Banks benefit in that credit card fraud is eliminated. The Identification confirmation system of the present invention system is virtually impregnable to criminals. The bank controls the entire transaction, since they capture and process as many biometrics as necessary before deciding whether or not to approve. Merchants and customers also benefit since consumer fraud costs are often passed onto them. Fingerprints are recognized all over the world as positive proof of identity and are the key to the system. Each finger contains up to 100 different points of distinction which never change with time. Merchants benefit in that the transaction time is minimized. The identification confirmation system of the present invention system minimizes the time between when the customer signs his name and when the transaction is approved. The system automatically captures the fingerprint data when the customer signs his name and processing begins immediately. Any transaction that does not involve cash requires a customer signature anyway - his obligation to pay. Customers also benefit from improved transaction efficiency by not having to wait in slow-moving lines. Customers benefit in that all cards are eliminated. Cards are easily lost or stolen, signatures are easily forged and PIN's are readily determined by criminals. While cards are easier to carry than money, they are almost as negotiable as money to sophisticated criminals. The identification confirmation system of the present invention system provides maximum security and safety for the customer by eliminating the need to carry all credit cards, debit cards, ATM cards. stored value cards, and pre-paid cards in a wallet or purse.

As shown in FIGURE 2A, the identification confirmation system of the present invention uses a biometric stylus 2 that has print imaging sensors positioned within the unique grip 4. Electronic images of the index finger and thumb are extracted during user registration. Thereafter, an applicant uses a similar stylus 2 to submit a set of prints for comparison with the set of prints of the authorized user - the prints either match or don't match. The use of two prints makes a mistake highly unlikely. The stylus 2 will thwart forgers since the content of the writing is unimportant. The stylus 2 is provided by banks, POS terminals, and government agencies worldwide.

In one preferred embodiment, the principles of the biometric stylus 2 can be combined with signature verification technology to identify the applicant and the writing content. Also, since prints of the index finger and thumb of the writing hand are the most common biometrics, once captured the prints can be used for comparing other types of touch contact (e.g. - a keypad). In another preferred embodiment, a digitizing inscription pad is used, and the position of the stylus 2 relative to the surface enables determination of the written text. An optical sensor in the writing surface reads the signature or the writing to be used in combination with the prints. Alternatively, the system includes a keypad in the writing surface for the customer to enter a PIN instead of the optical sensor or in addition to the optical sensor.

There are several types of print sensors that are preferred for the stylus 2 the following being listed with the preferred first.

Veridicom. Inc. uses a CMOS chip. These plates are covered with a thin layer of dielectric. When a finger is placed on top of the chip, each sensor acts as the bottom plate of a capacitor, with the surface of the finger acting as the top plate. The Veridicom chip as small as a postage stamp -- can be easily embedded into laptop computers and keyboards. Accompanying circuitry measures the capacitance of each of these sensors. Fingertip "valleys" are further from the chip, and show as a lower capacitance. Fingertip "ridges" yield a higher capacitance. The chip's dielectric technology enables people to touch the sensitive, silicon chip without destroying it. The dielectric is chemically and mechanically strong enough to allow repeated contact with people's fingers, yet electronically sensitive enough to capture the prints. Other suppliers of CMOS fingerprint sensors are Siemens, and Harris.

Identicator Technology Inc. uses Identicator's DFR-200 reader technology and its software algorithm technologies. A matchbox-sized fingerprint reader enables full feature extraction and match in less than one second. Instead of entering an ID and password to get into a corporate network, users simply put their finger atop the glass lens of a tiny reader affixed to the personal computer. The device photocopies the print and compares it to a database of thousands of other prints in well under a second. The Identicator print sensor enables secure user authentication on PC's.

TouchSafe Personal from Identrix is a state-of-the-art fingerprint verification reader. The design works with portables, desktops or servers, and assists with finger placement. TouchSafe Personal uses an internal 32-bit RISC processor, compact optics and encrypted serial communications. The optional smart card reader can store the fingerprint template and other confidential data. The Identix TouchPrint 600 Live-Scan Workstation is a fingerprint system that produces forensic-quality tenprint records by electronically scanning and capturing rolled fingerprints.

Registration in the system of the present invention is similar to opening a new bank account. An application provides the bank with basic information - name, address, phone number, and signature. The only difference is that a special stylus 2 is used that enables the bank to capture certain data while the applicant signs his name. These biometrics include prints of the index finger and thumb, and point and grip pressure.

The account can be accessed at any point-of-sale terminal. The person signs and prints his name using a biometric stylus 2 that's identical to the stylus 2 used during registration. The biometrics are again captured and compared to the biometrics of all registrants in search of a match. The bank then confirms that there are sufficient funds in the account, deducts the amount from the account, and approves the transaction. That's all there is to it!

A credit cardholder can also set up a new account at a point-of-sale terminal by use of his card. The cardholder swipes his card through a cardreader and signs and prints his name using the biometric stylus 2 . The biometrics are captured and the cardholder advises the credit card bank of the amount to be transferred to the new account. Account information is exchanged and the card is no longer needed.

Automated systems evaluate the fingerprint features by showing the coincidence of the minutiae features, taking into consideration the similarity, number, and unit relationship of the characteristics to each other. Searching and matching of fingerprints is accomplished by assigning each minutiae point a position on an x/y coordinate, a direction of flow, and relationship to other minutiae. If a person has to use a stylus 2 anyway to verify a commercial transaction, why not use sensors in the stylus 2 and writing surface to confirm identification (forget about the plastic cards).

in still another preferred embodiment of the identification confirmation system, other sensors are added to the stylus 2, as necessary, to tighten security and reduce fraud - including a pressure sensor to measure point pressure; another pressure sensor to measure grip pressure; an accelerometer to the stylus point to measure stroke speed; a gyroscope positioned at the top end of the stylus 2 to measure the angle of the stylus 2; a heat sensor in the stylus grip 4 to measure position of the index finger relative to the point; and a position sensor in the stylus grip 4 to measure the position of the thumb relative to the index finger. Additional sensors include measuring the speed of the signature, the customers finger temperature, and so on. While all of these biometric identifiers are subject to minor variations, the bank checks as many as needed until it is satisfied that the person seeking entry is authorized to access the account.

In a perfect system, the person who is entitled to entry will always be enabled entry, and all others will always be kept out. Hence, in addition to primary identifiers and biometrics (primary and secondary) other demographic information is analyzed when the decision of identity is in doubt to assure that the system of the present invention operates in a near-perfect manner. Such demographic information includes the location of the transaction request relative to the primary residence of the registrant, the frequency (if ever) that the registrant has ever engaged is such transactions, and whether or not the registrant has made other transaction during the past 24-hour period and where such transactions are located.

In yet another embodiment a grip 4 is provided that is compatible with conventional styluses and pencils, the print imaging sensors being positioned within the grip 4. The grip 4 is symmetrical and preferably has a cubical shape with concave sidewalls. A power cord is affixed to the grip 4 to provide power to the sensors and also to prevent theft. If the stylus 2 wears out or breaks down, it can be readily replaced with another conventional stylus, at a modest cost. Also, by having standard grip sizes, any problem with using biometric styluses of differing sizes which might change some of the properties of the biometrics are eliminated.

Some primary applications for the system of the present invention include identification for (1) Drivers' license registration and verification; (2) Voter registration and confirmation; (3) Law enforcement; (4) Credit card verification; (5) All banking transactions; and (6) College and high school students for applying for financial aid and to confirm test-taker identification.

In still another embodiment of the system of the present invention, the biometric stylus 2 is combined with one or more primary identifiers to authenticate identification to replace credit, debit cards and the like. The primary identifiers include phone number, name. area code or zip code. The system performs the initial search based upon the primary identifier(s) to reduce the size of the universe. Then identity is either confirmed or denied based upon the prints. In another preferred embodiment, additional biometric sensors are used in addition to the fingerprints.

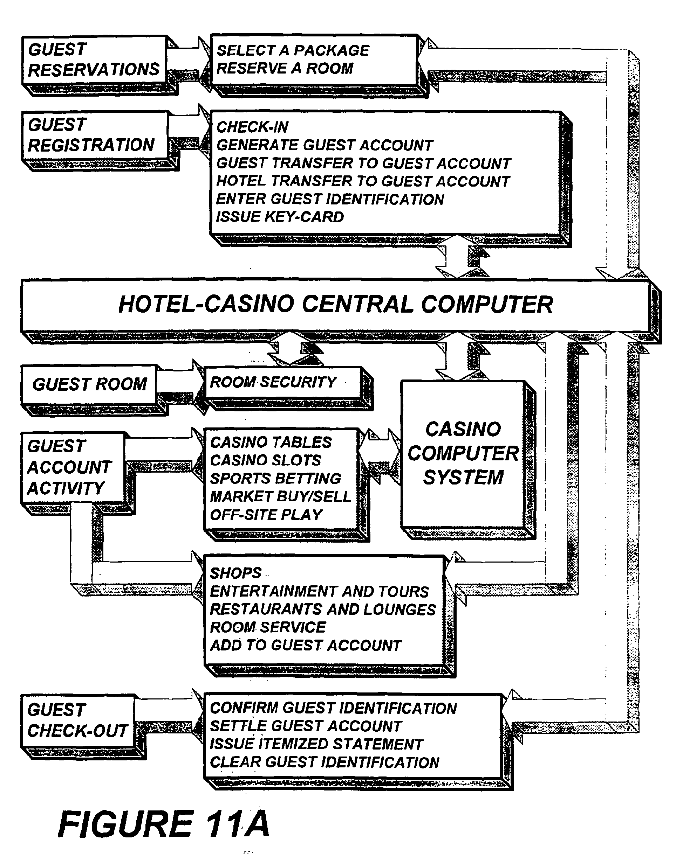

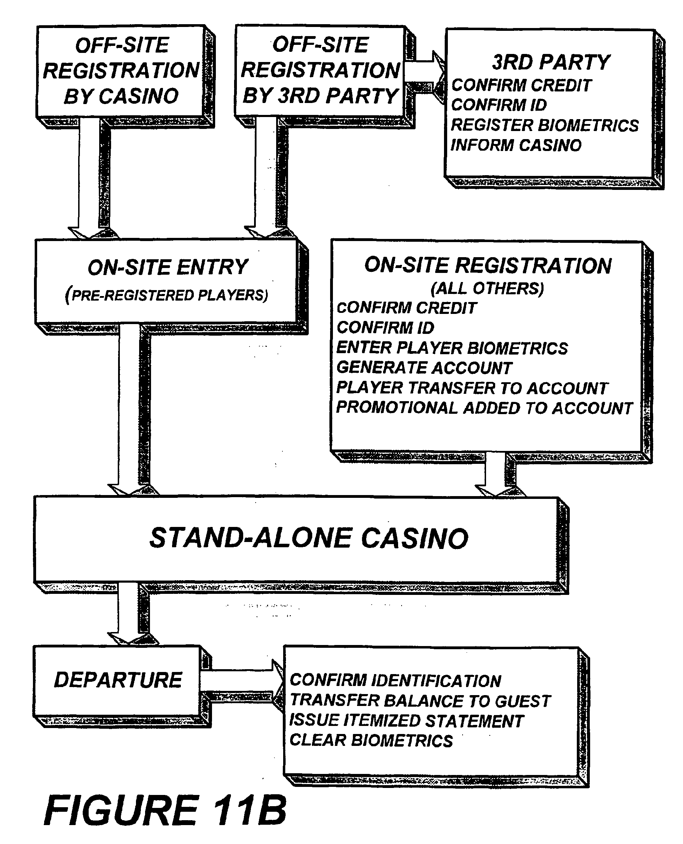

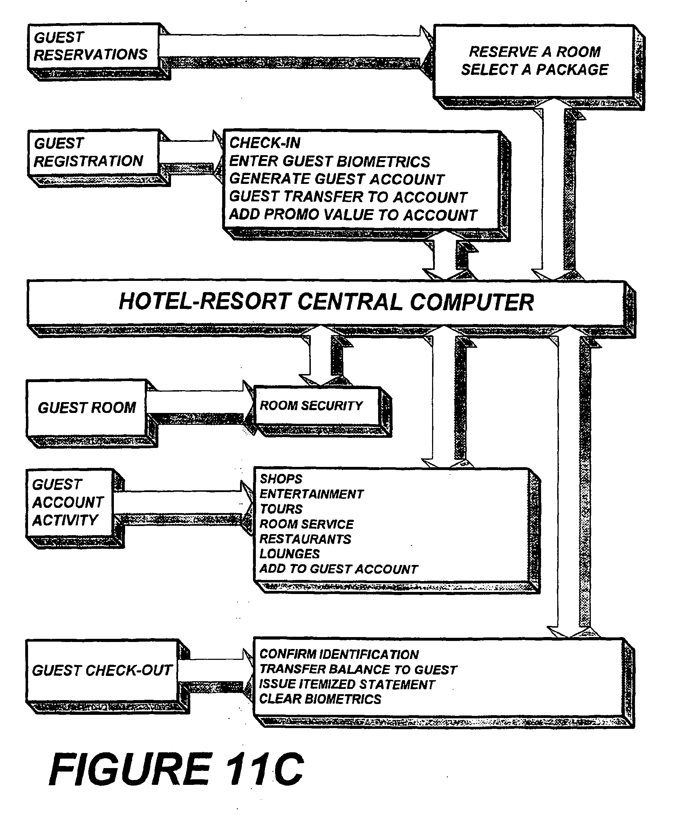

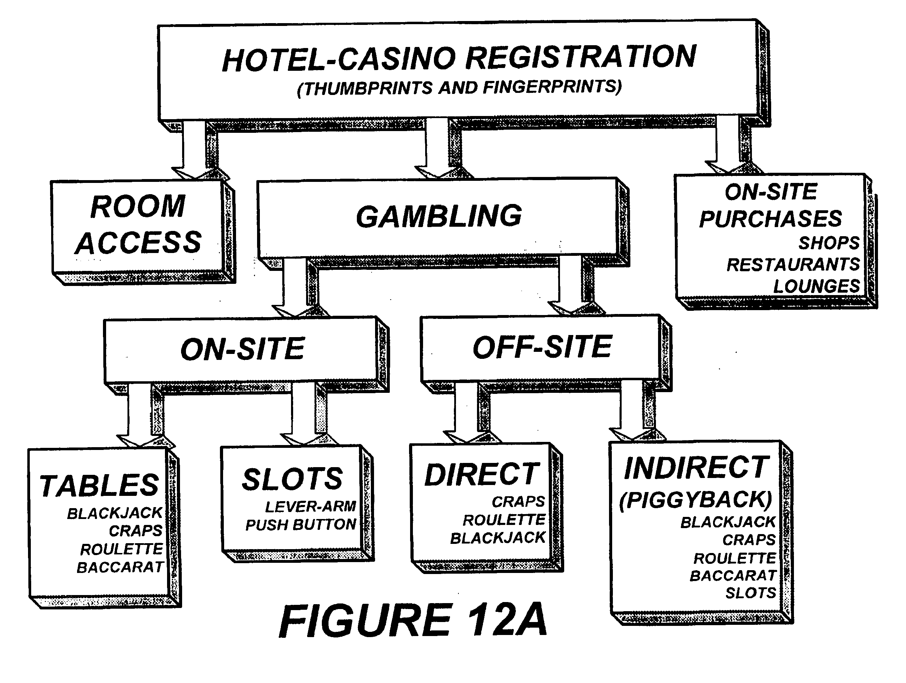

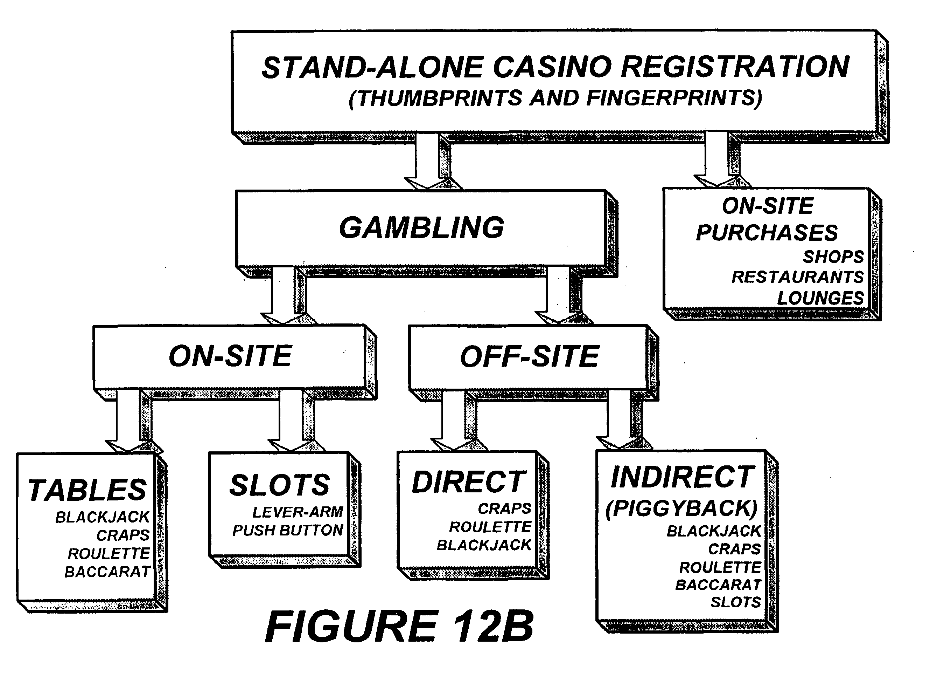

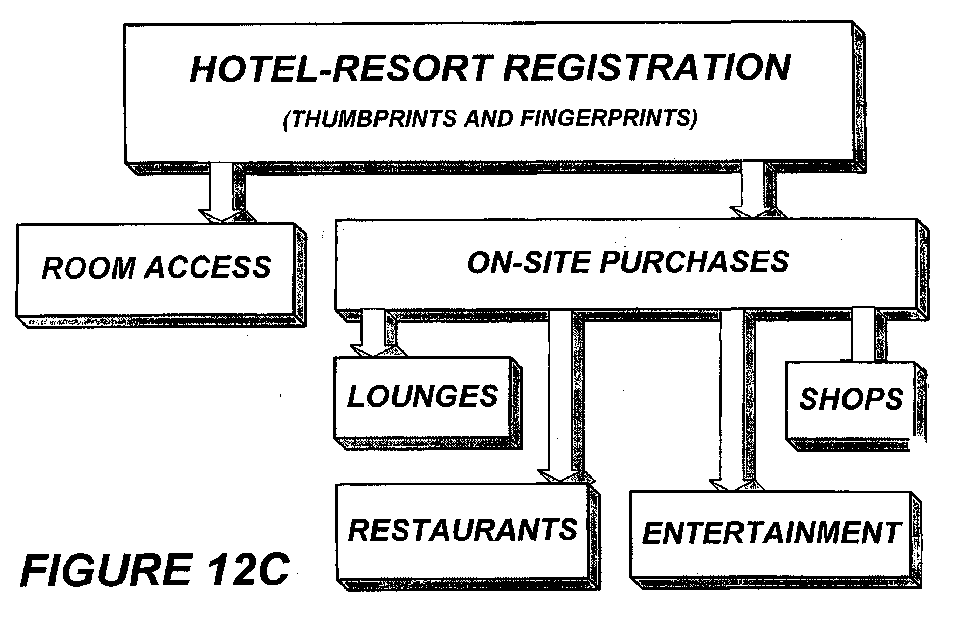

To better illustrate how the principles of the present invention can be used in closed environments to replace single purpose cards, house cards, debit cards and the like, attention is now drawn to FIGURES 11A, 11B, and 11C, which illustrate various closed environments (hotel-casino, a stand-alone casino, and a hotel-resort, respectively. PCT Application 97/05736 (Black and Dykman) discloses a system whereby the casino is able to acquire all information relative to live games in the casino (such as blackjack, roulette, and craps) by use of scanners, house cards, and interactive monitors. The casino is able to ascertain the identity of each player, how much each player is wagering, each player's gaming decisions, and the value of the gaming materials. See for example U.S. Patent 5,326,104; U.S. Patent 5,340,119; U.S. Patent 5,566,327 (Sehr). Similarly, FIGURES 12A, 12B, and 12C disclose is a functional block diagram disclosing a block diagram configuration of the primary components for the system of the present invention for use in the systems of FIGURES 11A, 11B, and 11C, respectively.

The system of the present invention comprises biometric registration upon entry into the complex, biometric access to a guest room, biometric purchases on-site within the complex such as restaurants, lounges, boutique shops, and the like, and biometric play of slot machines, biometric play at gaming tables.

To participate in the system of the present invention, the guest selects the biometric option during registration, confirms his identity, selects an amount to be entered into a credit account, and enters biometric identifiers that are to be used on-site during his stay. Thereafter whenever the guest seeks access to his room or access to the credit account, identification is confirmed by matching the biometric identifiers and the guest can participate in all amenities offered within the complex.

The biometric identifiers of choice involve prints of the hand, since hands are the natural way for people to manually engage a device, such as slot machine, a keypad, a door latch, and a stylus 2 . While other hand prints, such as the palm and prints of all the fingers, the hand prints are preferably the print of the thumb and the index finger for reasons hereafter described. During registration, the guests are offered one or more choices of on-site participation during their stay. The process interface of the various

A first option is conventional identification where the guests carry on their persons cash, chips, credit cards, and the like so that they have access to various areas within the complex, such as their guest rooms, table games within the casino, slot machines within the casino, shops, lounges, and restaurants, and entertainment.

A second option is the system described in PCT Application 97/05736 (Black et al.), wherein the guests use a key-card within the hotel complex. The room key is in the general shape of a credit card and enables room access. The opposite edge of the room key has value added thereto during registration, enabling the guest to pay for goods and services while on the premises by use of the card so long as there is sufficient value in the credit account to cover the costs of such goods and services. When the value of the credit account becomes depleted. the guest either purchases additional value or uses another form of payment.

In order to prevent the use of the card by unauthorized persons, the user identifies himself prior to use. While a PIN may be useful for purposes of identification, it is generally agreed that when considerable value is involved, better security than what a PIN can provide is needed. The identifier of choice for this system is a thumbprint that the guest uses to confirm identity. The print is registered during check-in, is digitized and preserved in a file for the guest. The key-card includes data that matches the guest with the print. The guest requests access to the credit account by inserting the key-card into a card reader. Once a match is made of the thumbprints access is enabled.

The key-card system is completely compatible with conventional systems as mentioned in the first option. The two systems can operate side by side, wherein some guests use the first option while others the second. It is also possible for the same guest to use the key-card system for a while, and switch at any time to the conventional system, and back again to the key-card system

The third option is the process control system of the present invention which is compatible with conventional play, with the key-card option, both systems together, and even other systems. Since a biometric is preferably employed in the key-card system, the system of the present invention eliminates the key-card completely, and simply enable a guest to use biometrics to access his credit account from anywhere with the complex.

The biometric identifiers of choice are the prints of the thumb and index finger of the right hand for a right-handed person, and the thumb and index finger of the left hand for a left-handed person. The prints are submitted to the system processor by conventional means whereby the guest places his thumb and then his finger onto a transparent button, enabling such prints to be read and digitized for subsequent use. Confirmation of thumb and fingerprints can be accomplished at all point-of-sale locations within the complex by optical sensors similar to the registration system.

Another means for biometric identification in all point-of-sale transactions involves a stylus 2 that enables the hotel to use the guest's signature which is submitted during check-in as an identifier.

Yet another way to register into the system of the present invention is by means of a unique biometric stylus 2. The biometric identifiers are preferably prints of the index finger and thumb and are sensed by means of a stylus 2. The stylus 2 is preferable a stylus 2 which has a special sensing grip 4 to fit the hand and enable a good reading of the thumb and index finger. The grip 4 is transparent. The stylus 2 is preferably portable and includes an optical or print imaging sensor. Once read, the signals of the prints are transmitted for processing. The guest can add value to his account at terminals throughout the casino.

When one uses a stylus 2, it is generally grasped by the index finger and thumb for purposes of writing on a flat surface. The stylus 2 includes two adjacent flat surfaces which are specifically configured to optimize the completeness of the prints taken. If the guest is right-handed, the surface used to read the index finger is to the right of the second surface. If the guest is left handed, the surface for the index finger is to the left of the second surface. In both instances the second surface is used to read the guest's thumbprint. Accordingly, sensors are embedded within the stylus 2 to read each of these prints.

The fingerprint capture and verification system is commercially available from Thomson-CSF Semiconducteurs Specifiques (TCS) and Oxford Micro Devices, Inc. TCS' FingerChip^{TM} silicon chip fingerprint sensor and Oxford's A236 video digital signal processor chip are deployed together to create a fully-programmable and optimized fingerprint capture and verification system. The FingerChip^{TM} measures only 2 millimeters by seventeen millimeters and uses print imaging to capture images of the guest's fingerprint disposed over the protected surface of the chip. After the finger is swept across the surface, an image of the fingerprint is reconstructed from a sequence of video images and digitized. The image data is then processed and reconstructed by an algorithm that is proprietary to Thomson, after which verification of the fingerprint is performed.

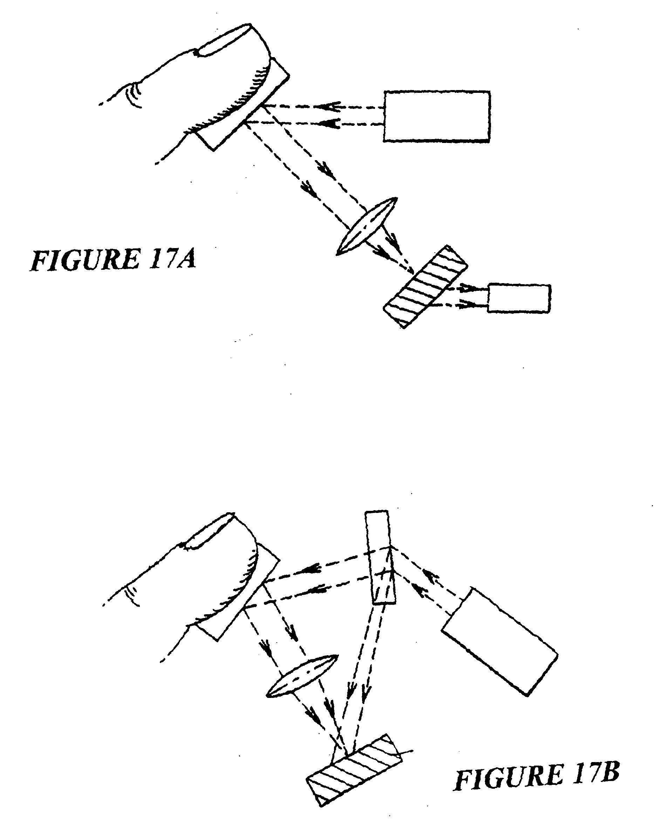

Another version of the biometric stylus 2 employs optical sensors and imaging (see FIGURES 17A and 17B) The one or more sensors are preferably compatible with an optoelectronic sensing and processing system. The sensor enables a new version of the biometric print to be during check-in. The sensors are in cooperative engagement with the processor where the prints are stored for future use. The processor advises the employee at the point-of-sale transaction to enable access to the credit account when the new version of the biometric print matches the reference version of the biometric print.

The optoelectronic system includes a laser source to improve system accuracy and uses Fourier transforms, which are generally realized in numerous applications of pattern recognition techniques. The sensors are highly sensitive to the relative angular orientation of the matched filter and the biometric print.

The handprint area on the surface of the biometric stylus 2 enables the reading of the biometric prints is transparent providing a means for angular orientation in real time and response in real time. The thumb and index finger are placed against the print areas of the biometric stylus 2.

The light from the laser illuminates the tips of the thumb and index finger, and the light reflected from the thumb and index finger tips pass as an encoded beam through a spherical lens which projects the beam upon a matched filter located at its shadow plane. The matched filter represents the complex spatial Fourier transform of the image of a reference thumbprint and index-finger print, having been produced with coherent light on any suitable recording medium such as photographic, thermoplastic or photothermoplastic media.

For subsequent matching, the person rotates the thumb or index finger to align the Fourier- transform of the introduced thumb with the stored holographic representation of the authorized thumbprint. As the person rotates the thumb correlation procedures are realized continuously in time until the images are angularly matched and a correlation signal is present.

The Fourier-spectrum comparison provides invariance to in-plane displacements of the introduced image and invariance to in-plane scale differences. The procedure automatically provides the formation of the correlation signal inside the wavefront, the procedure being absolutely real-time, as a result of the implementation of the two-dimensional spatial comparison.

A photo-sensitive element is located in the shadow plane of the matched filter. The output command signal of the photo-sensitive element is cooperatively engaged to the security access member, such as a release member of a guest room or a trigger member of a slot that engages the rotating drums of the slot machine causing them to rotate. The security access system is compatible with any mechanical, electronic, or pneumatic lock control which operates in response to a command signal from a photoelectronic element.

Optoelectronic locking systems utilizing biometric identifiers are well known in the art. U.S. Patent 5,138.468 (Barbenell) discloses a keyless holographic lock, and U.S. Patent 4,876,725 (Tomko) discloses an optical fingerprint verification system.

The stylus 2 has a special sensing grip 4 to fit the hand and enable a good reading. The cross-section of the stylus 2 is generally rectangular with rounded corners, and the print surfaces for the thumb and index finger are slightly recessed and concave.

In one variation, the biometric stylus 2 is attached to a surface or counter by means of a plastic coated hollow rube, containing fiber optic cable therewithin. It is through the fiber optic cable that the print images are transmitted to the processor disposed within the surface or counter. The sensors are disposed within the stylus 2. In another variation, the biometric stylus 2 is portable. While the sensors are also disposed within the stylus 2. the signals of the prints are transmitted to the processor for conversion and storage. The prints of the thumb and index finger are preserved in the systems processor for as references for subsequent comparisons. The goods and service providers have a similar stylus 2 which is used by the guest to confirm identification and access the credit account.

The biometric stylus 2 also has applications beyond hotel and casino applications. Some of these applications include in any point-of-sale transaction, in the sales of controlled substances (guns, liquor, medicines), on-site in banks to enable account access, driver's licenses renewals, and to confirm the identity of all test-takers.

Some advantages of a biometric stylus 2 in these other applications include that it is more secure for identification purposes than driver's license or credit cards, and it can be used even if an alias is signed since the print is being compared and not the text of what is written.

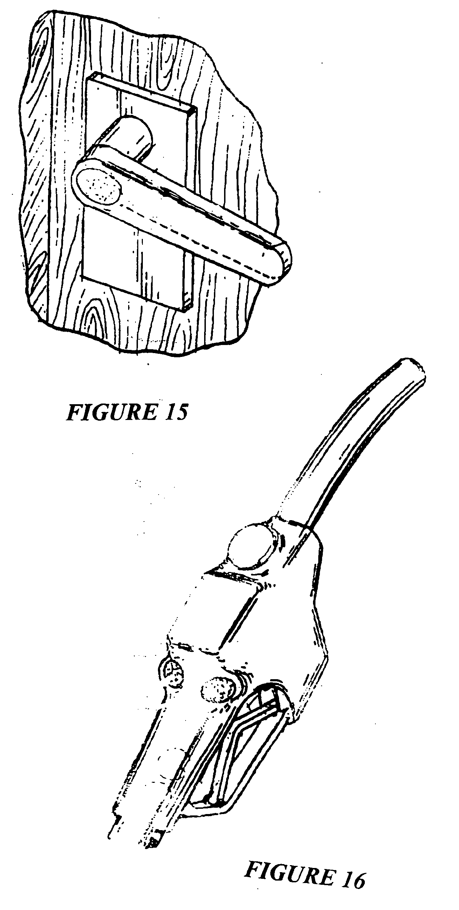

Access to a guest suite is enabled by the system when the guest grasps a door handle and rotates the handle, identification is confirmed once the door handle is grasped. Most hotel rooms have a latch-type door for room access. When the guest wants access to his room, he grasps the latch handle with his thumb in a preset location, generally the top of the cylinder attaching the latch portion to the door. He applies pressure to the latch portion and the thumb print is read by an optical sensor. The computer seeks a match the thumb print of the person who has registered access to the room. If identification is confirmed, room access is enabled (see FIGURE 15). In a similar manner, FIGURE 16 discloses the biometric prints captured during an application for a gasoline service station card can be used to confirm identity while the customer is filling his tank.

The engagement member is configured to enable a biometric print to be sensed upon a manual contact with the engagement member. The engagement member is repositioned when a manual force is applied in a clockwise direction. The engagement member includes one or more print areas that are transparent, the print areas enabling the optoelectronic sensors to read and analyze the print. The engagement member enables room entry through a door knob or latch, a vehicle door (see 19B).

When a person seeks access into the restricted area, the person applies a manual force to an engagement member. The force can be a push for a push button or digital key, or a rotational twist for a door knob, or door latch. Contact of the person's hand with the engagement member is required.

Whenever an engagement member, like a door knob or latch is opened by the application of even moderate to light manual force, more than one print is needed to secure the member within the hand of the person seeking entry. The thumbprint, the print of the index finger and even some of the other prints are read and preserved for subsequent comparison. The hotel employee assigns a room and enters data into the system assigning the prints of the guests to each guest room.

Subsequently, when room access is requested, the prints are read when the latch or door handle is grasped. One or more sensors is positioned within the engagement member for monitoring and preserving new versions of the biometric prints. The data relative to the biometric prints are sensed and preserved for subsequent use whenever the engagement member is touched.

Initially, the primary print (thumbprint) is scanned to determine if the reading provides goods prints for purposes of comparing and matching. If the thumbprint is blurred, one or more secondary prints (index finger, other fingers, palm) are examined. No search is initiated until and unless a good print is provided for purposes of comparison.

The processor compares the new version of the biometric print as against prints of all those who are authorized to enter the particular room in search of a match. Gentry into the guest room is enabled only after the biometric print of the person seeking entry matches the biometric prim of a person having authorized access.

For applications involving a small number of authorized users (a guest room or a telephone or computer terminal within the guest room), if the person requesting access provides a good primary print, only the one print is compared and if there is no match there is no need to read other prints. If the results are inconclusive, one or more secondary prints are compared for a possible match.

The system is particularly well-suited for use with a conventional door latch mechanism, and FIGURE 15 discloses a first embodiment of the system of the present invention for use with a door latch. Such latches are common in homes, apartments, business offices, and hotels. To engage the latch, the thumb is positioned in a circular recess on the latch handle, the recess being secured to the latch mount, the latch mount being normal to the latch handle. The primary prints are the thumb and the index finger. The hand engagement mechanism does not tum unless and until identification has been confirmed.

The contour portion of the engagement member is recessed and indented to enable a three-dimensional scan of each print. If the button is flat and little force is needed for engagement a full reading of enough of the print does not enable confirmation of identification with sufficient confidence to enable access.

FIGURE 15 discloses a second preferred embodiment of the engagement member for the system for use with a door knob. The knob is modified to include a plurality of contours for the thumb and fingers when the knob is grasped. The door knob is specially contoured and designed to match the contours of the hand when the door knob is grasped, the position of the thumb, and lingers are predetermined as the digits fit into the individual contours. The resident may choose from a variety of shapes and sizes.

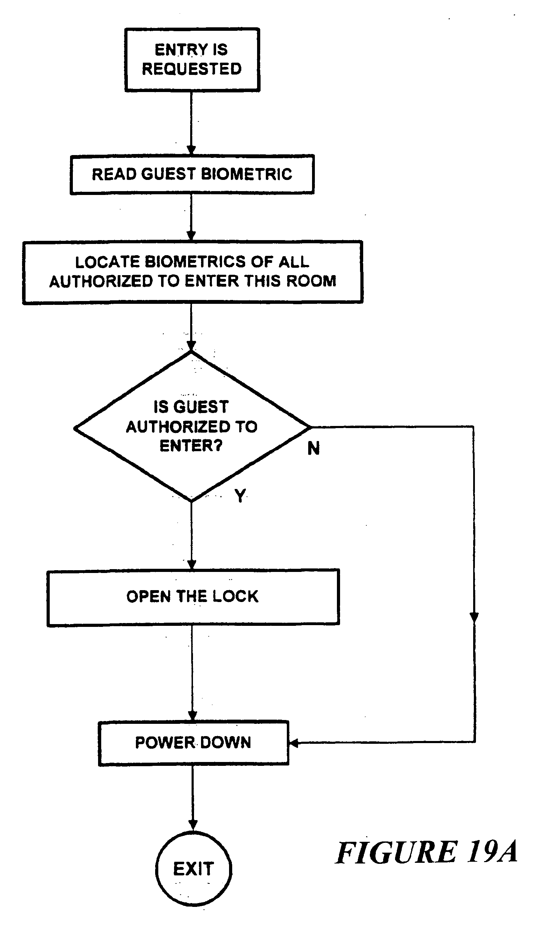

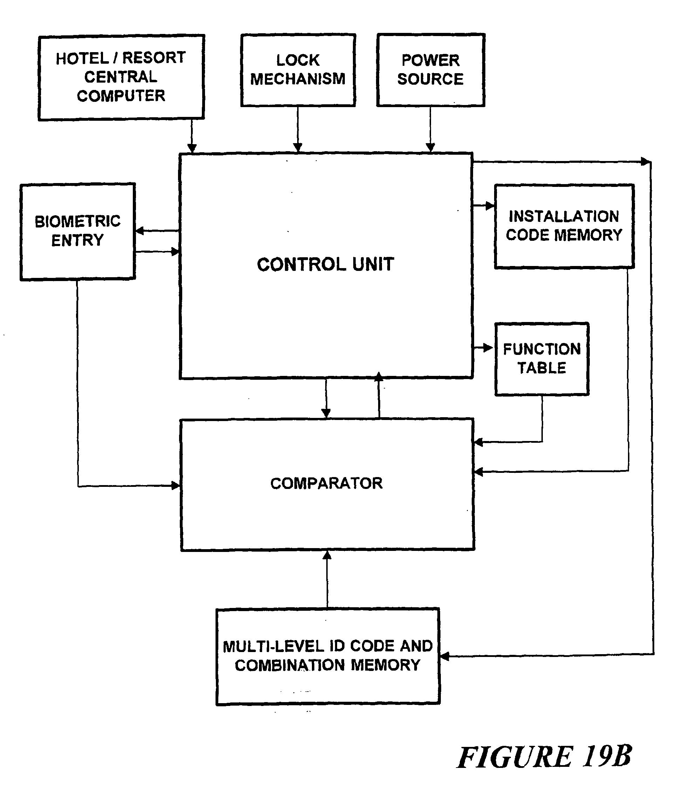

The engagement member may be locked into place until guest, identification is confirmed. The engagement member may also be repositionable prior to identification, but not engaged with the release member. Once identification is confirmed and the person is identified as an authorized entrant, access is enabled. The later approach provides the system more time to confirm player identification. FIGURE 19A a simplified logic diagram for biometric room entry.

Also, push-pull door knobs (not shown) are becoming increasingly common, particularly with older people who have difficulty completing a secure grip 4 and applying sufficient force to enable entry. For all practical purposes the principles of the present invention are fully applicable to these door knobs and the sensors are positioned within the knob to correspond with the approptiate hand force or motion used to engage such doors, the pulling or pushing motion.

In a similar manner, the system is configured to enable a player to engage any slot machine on the premises purely by biometric means. A lever-type slot match operates similar to the latch-type hotel door described above The player grasps the handle and pulls it forward, the thumb being placed on a preset location on the lever. An optical sensor reads the print and seeks a match with all registered prints in the system. Once identification has been confirmed, and the available account balance is sufficient to cover the play, the rollers in the slot machine are engages and play is enabled. The biometric identifier ensures that the player making the wager is the player to whom access to the credit account is enabled. The biometric identifier prevents any unauthorized. If the player wins, the credit balance is increased and if the player loses the credit balance is decreased. If the slot machine is of the push button variety, the player requests play at the machine by pressing the push button.

Also, the system enables a player to participate in any table game on the premises, either while at the table or from a remote location. While the principles of are applicable to all games played within a casino (such as roulette, craps, baccarat), reference in this specification is made primarily to blackjack for purposes of illustration only. The player requests access to his credit account by pressing the push buttons on the player station. An optical sensor reads the print and seeks a match with all registered prints in the system. Once identification has been confirmed, and the available credit balance in the player's credit account is sufficient to cover the play, play is enabled. If the player wins, the credit balance is increased and if the player loses the credit balance is decreased. Identification is confirmed prior to each hand by biometric means.

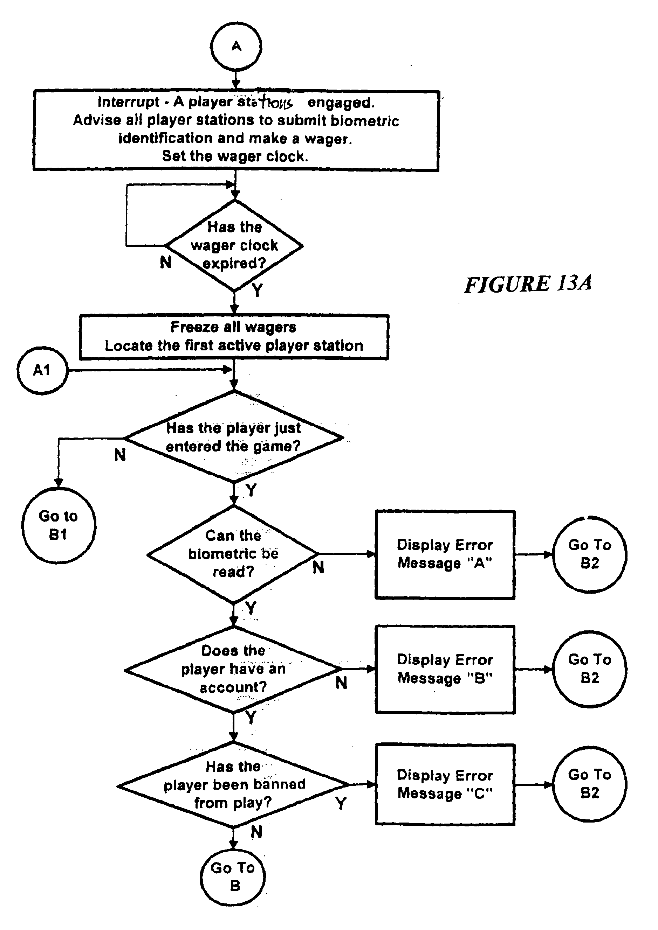

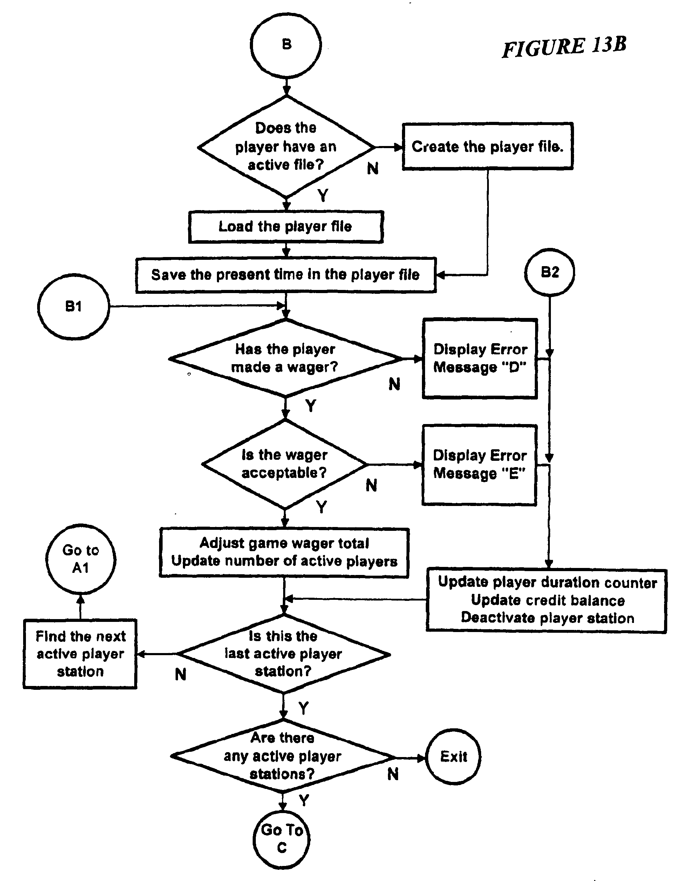

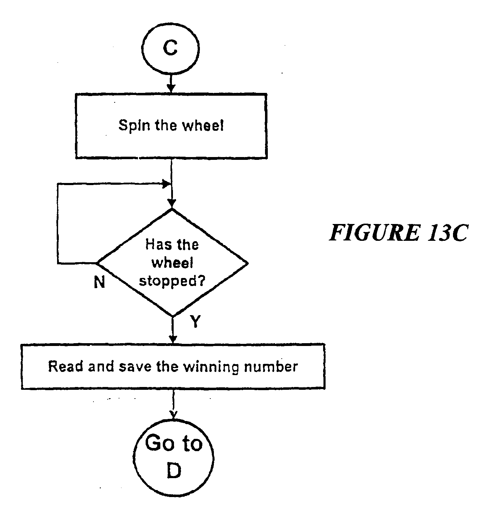

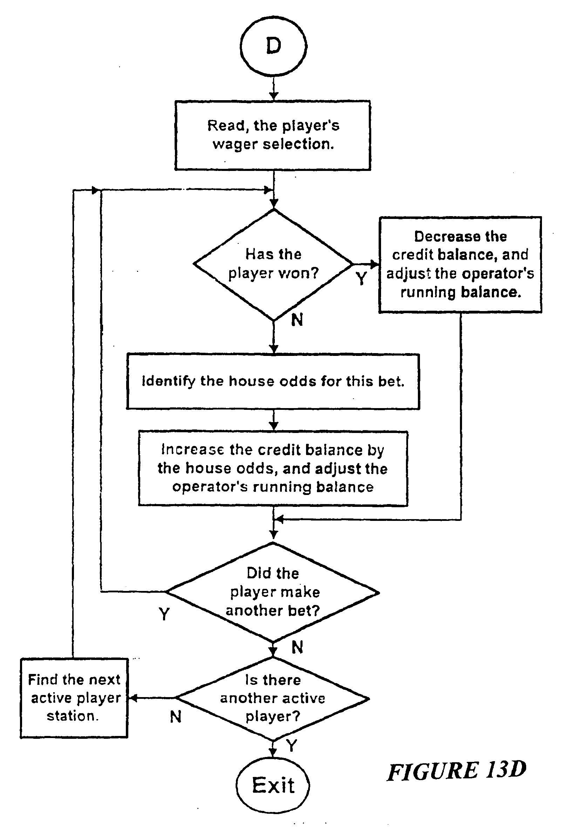

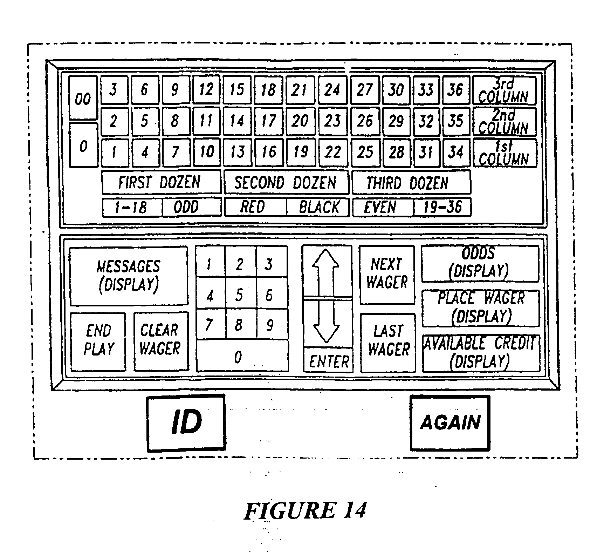

Unless the player changes the wager amount after each gaming unit, the same wager is entered for the next gaming unit. However, the player needs to press an "AGAIN" button before each gaming unit to confirm that the player still physically remains at the player position (see FIGURE 14). FIGURES 13A through 13D disclose a simplified a logic sequence for a roulette game showing the gaming system from initial clearance for a player to final withdrawal of the player from the game for use with the systems of 11A and 11B.

The system enables a guest to make any on-site purchase, at a restaurant, lounge, boutique shop, or the like and access the credit balance registered with the complex. The guest grasps a biometric stylus 2 similar to the implement used at registration to enter the print of the index finger and thumb. An optical sensor reads the thumb and index-finger print from the implement and seeks a match with all registered prints in the system. Once identification has been confirmed, and the available credit balance in the guest's credit account is sufficient to cover the purchase, the purchase is made and the credit balance is decreased by the amount of the purchase. Alternately, the guest submits a finger or thumbprint at the point-of-sale through conventional sensors to confirm identification.

The security access system has numerous applications, entry into any private area; replacement for any PIN: telephone handset and related off-site purchases; and computer keyboard and related off-site purchases. The system can also be incorporated into process control environment where security is required. The security access system enables authorized access to a restricted area and a credit balance and comprises an engagement member, one or more sensors, a processor, and a security access member.

A distinction is made between applications involving the matching of prints of the guest requesting access as against a limited number of authorized entrants (guest room access) and those applications where the prints of the guest requesting access are compared against a large number of guests in the system (slot and table play in a casino). While both instances require a comparison with known authorized entrants, the former comprises a much smaller pool and processing is greatly simplified. In the latter, the central processor needs to process a considerably more data, and search strategies are used to streamline the search.

For example, in applications involving slot machine access, the search compares the prints of the player seeking entry with all registered guests. initially, the prints of the guest seeking entry are compared with the player who last played this slot machine. Absent a match, the prints are compared with other players playing adjacent machines. Absent a match, the prints are compared with all players in the general area within the last few minutes. Eventually, the pool is expanded until all registered guests have been screened for a match. To improve efficiency, the prints can be sorted by types and styles that are well known in the art. The pool is gradually expanded in logical incremental steps. With each gradual expansion, previously checked prints can be dropped so that they are not rechecked. This area is continually expanded until a match is found or the search has been completed.

The system is readily adaptable to off site purchases and other applications involving the telephone or the keyboard of a computer (not shown). It often becomes necessary to confirm positively the identity of the person on the other end of the telephone. For off-site purchases by phone, it is important to confirm the identify of the person making the purchases. Also, many phones now have caller ID where the person receiving the incoming call can read the caller's phone number before answering the call. If the caller uses the engagement member, the person receiving the call can also identify the caller.

For the handle or handset of a telephone, the primary prints are the thumb, the index finger, and the middle finger. In another embodiment, the optical sensors can also be positioned relative to any of the digital keys on the phone and confirm identification. This approach is useful in applications involving a smaller pool of possible users since only one print is read.

The system when used in applications involving keypads and computer keyboards includes a modified keyboard with the sensors positioned either relative to an existing key or a special biometric push button having a recess to enable a three-dimensional print (see FIGURE 10). When one or more keys are pressed, the prints of the usher are read to confirm that entry is authorized.

The optical sensors can also be positioned relative to any of the digital keys on the keyboard and confirm identification. A smaller pool of users is needed since only one print is read. However, keyboard sensors can be useful in instances where the caller's phone number is read and there are only a limited number of people authorized from that number as with a modem. Also, keyboard sensors can be used in combination with PIN's to provide increased security.

Preferably, multiple biometric prints are used to confirm identification. Secondary biometrics include not only fingerprints, thumbprints, and palm prints, but also speech and voice recognition, and facial readings (retinal scans, infrared facial readings, feature spacings, and the like). For example, to enter a guest room, a parallel system may include a recorded message asking "Who's there?" The response is recorded through a speaker and voice recognition is used to identify the speaker. Speech recognition can also be used to monitor the content of the response. Also, facial imaging scanners are disposed within the doors to guest rooms and in overhead cameras with mirrors in the casinos for use as secondary biometrics. All unauthorized biometric prints can be preserved for law enforcement purposes to assist in identifying and convicting burglars and thieves.

The system is also applicable to resort hotel complexes that do not include slot machines, tables gaming, and other type of gambling activity. Similarly, the principles of the present invention are also applicable to standalone casinos that do not have guest rooms. Registration can occur for a standalone casino either off-site with pre-authorized third parties or with the casino.

It is evident that many alternatives, modifications, and variations of the identification confirmation system of the present invention will be apparent to those skilled in the art in light of the disclosure herein.

## Claims

1. A method for conducting a financial transaction, the method comprising:
capturing reference data regarding a reference primary identifier for a registrant and retaining such data in a registrant record, such registrant record being locatable by use of the primary identifer,
capturing reference fingerprint data of the registrant and saving the reference fingerprint data in the registrant record;
submitting a current primary identifier and current fingerprint data at a later point in time;
capturing the current fingerprint data of a customer while the customer grasps a pen or stylus (2) to generate writing, the pen or stylus having a grip (4) and a fingerprint sensor positioned in the grip;
searching through the registrant records for a match between the current primary identifier and the reference primary identifier;
comparing, for the registrant records where the current primary identifier matches the reference primary identifier, the current fingerprint data of the customer with the reference fingerprint data of the registrant for purposes of identity confirmation; and
proceeding to process the financial transaction once customer identity is confirmed by comparison of the primary identifier data and the fingerprint data;
wherein each of the reference primary identifier and the current primary identifier is a series of letters.

2. The method of Claim 1, wherein the fingerprint biometric data is captured in addition to the writing.

3. The method of Claim 1 or 2, wherein the fingerprint sensor is adapted to capture a thumbprint of a user as a user's thumb touches the grip (4) of the pen or stylus (2).

4. The method of Claim 3, wherein the grip (4) of the pen or stylus (2) is also adapted to capture an index fingerprint of the user when the pen or stylus is touched by the user to generate writing.

5. The method of Claim 1, further comprising capturing additional biometric data while the customer generates the writing, the current biometric data being at least one fingerprint and a signature.

6. A system for processing commercial transactions, the system comprising:
means for capturing reference data regarding a reference primary identifier for a registrant;
a first fingerprint sensor to capture reference fingerprint data, the reference fingerprint data regarding at least one fingerprint of the registrant;
a databank for retaining registrant records, such registrant records including the reference fingerprint data and the reference primary identifier, the registrant record being locatable by use of the primary identifier;
means for submitting a current primary identifier;
a second fingerprint sensor positioned in the grip of a pen or stylus enabling the capture of a current set of fingerprint data of a customer when the pen or stylus is grasped to generate writing, the current fingerprint data regarding the same fingerprint as the reference fingerprint;
a system driver for searching through the registrant records for a match between the current primary identifier and the reference primary identifier, and the system driver being configured for comparing the current fingerprint data to the reference fingerprint data regarding the fingerprint, where the current primary identifier matches the reference primary identifier, and
means for processing the commercial transaction if the system driver confirms the identity of the customer by comparison of the primary identifier data and the fingerprint data;
wherein each of the reference primary identifier and the current primary identifier is a series of letters.

7. The system of Claim 6, further comprising a third fingerprint sensor positioned in the grip of the pen or stylus for the capture of a thumb print.

8. The system of Claim 7, wherein the third fingerprint sensor of the pen or stylus (2) is also adapted to capture an index fingerprint of the user when the pen or stylus is touched by the user to generate writing.

9. The system of Claim 6, further comprising:
a processor coupled to the sensor being adapted to receive the captured fingerprint data and to compare the captured fingerprint data with the reference fingerprint data.

## Patentansprüche

1. Verfahren zum Durchfahrten einer finanziellen Transaktion, wobei das Verfahren umfasst
Erfassen von Bezugsdaten bezüglich einer Bezugs-Primärkennung für einen Registranten und Halten dieser Daten in einem Registranten-Eintrag, wobei dieser Registranten-Eintrag unter Verwendung der Primärkennung aufgefunden werden kann;
Erfassen von Bezugs-Fingerabdruckdaten des Registranten und Speichern der Bezugs-Fingerabdruckdaten in dem Registranten-Eintrag;
Vorlegen einer-aktuellen Primärkennung und aktueller Fingerabdruckdaten zu einem späteren Zeitpunkt;
Erfassen der aktuellen Fingerabdruckdaten eines Kunden, während der Kunde einen Stift oder Digitalstift (stylus) (2) ergreift, um Schrift zu erzeugen, wobei der Stift oder Digitalstift einen Griff (4) und einen in dem Griff angeordneten Fingerabdrucksensor hat;
Durchsuchen der Registranten-Einträge nach einer Übereinstimmung zwischen der aktuellen Primärkennung und der Bezugs-Primärkennung;
Vergleiche der aktuellen Fingerabdruckdaten des Kunden mit den Bezugs-Fingerabdruckdaten des Registranten zum Zweck der Identitatsbestätigung für die Registranten-Einträge, bei denen die aktuelle Primärkennung mit der Bezugs-Primärkennung obereinsfimmt und
Übergehen zur Abwicklung der finanziellen Transaktion, wenn die Kundenidentität durch Vergleich der Primärkennungs-Daten und der Fingerabdruckdaten bestätigt wird;
wobei die Bezugs-Primärkennung und die aktuelle Primärkennung jeweils eine Reihe von Buchstaben sind.

2. Verfahren nach Anspruch 1, wobei die biometrischen Fingerabdruckdaten zusätzlich zu der Schrift erfasst werden.

3. Verfahren nach Anspruch 1 oder 2, wobei der Fingerabdrucksensor so eingerichtet ist, dass er einen Fingerabdruck eines Benutzers erfasst, wenn der Daumen eines Benutzers den Griff (4) des Stiftes oder Digitalstiftes (2) berührt,

4. Verfahren nach Anspruch 3, wobei der Griff (4) des Stiftes oder Digitalstiftes (2) des Weiteren so eingerichtet ist, dass er einen Abdruck des Zeigefingers des Benutzers erfasst, wenn der Stift oder Digitalstift von dem Benutzer zum Erzeugen von Schrift berührt wird.

5. Verfahren nach Anspruch 9, das des Weiteren umfasst, dass zusätzliche biometrische Daten erfasst werden, während der Kunde die Schrift erzeugt, wobei die aktuellen biometrischen Daten wenigstens ein Fingerabdruck oder eine Unterschrift sind.

6. System zum Abwickeln kommerzieller Transaktionen, wobei das System umfasst:
eine Einrichtung zum Erfassen von Bezugsdaten bezüglich einer Bezugs-Primärkennung für einen Registranten;
einen ersten Fingerabdrucksensor zum Erfassen von Bezugs-Fingerabdruckdaten, wobei sich die Bezugs-Fingerabdruckdaten auf wenigstens einen Fingerabdruck des Registranten beziehen;
eine Datenbank zum Halten von Registranten-Einträgen, wobei diese Registranten-Einträge die Bezugs-Fingerabdruckdaten und die 8ezugs-Primärkennung enthalten und der Registranten-Eintrag unter Verwendung der Primärkennung aufgefunden werden kann;
eine Einrichtung zum Vorlegen einer aktuellen Primärkennung;
einen zweiten Fingerabdrucksensor, der im Griff eines Stiftes oder Digitalstiftes angeordnet ist und das Erfassen eines aktuellen Satzes von Fingerabdruckdaten eines Kunden ermöglicht, wenn der Stift oder Digitalstift ergriffen wird, um Schrift zu erzeugen, wobei sich die aktuellen Fingerabdruckdaten auf den gleichen Fingerabdruck wie der Bezugs-Fingerabdruck beziehen;
eine Systemsteuerung zum Durchsuchen der Registranten-Einträge nach einer Über einstimmung zwischen der aktuellen Primärkennung und der Bezugs-Primärkennung, wobei die Systemsteuerung so konfiguriert ist, dass sie die aktuellen Fingerabdruckdaten mit den Bezugs-Fingerabdruckdaten vergleicht, die sich auf den Fingerabdruck beziehen, wenn die aktuelle Primärkennung mit der Bezugs-Primärkennung übereinstimmt; und
eine Einrichtung zum Abwickeln der kommerziellen Transaktion, wenn die Systemsteuerung die Identität des Kunden durch Vergleich der Primärkennungs-Daten und der Fingerabdruckdaten bestätigt;
wobei die Bezugs-Primärkennung und die aktuelle Primärkennung jeweils eine Reihe von Buchstaben sind.

7. System nach Anspruch 6, das des Weiteren einen dritten Fingerabdrucksensor umfasst, der im Griff des Stiftes oder Digitalstiftes zum Erfassen eines Daumenabdrucks angeordnet ist.

8. System nach Anspruch 7, wobei der dritte Fingerabdrucksensor des Stiftes oder Digitalstiftes (2) des Weiteren so eingerichtet ist, dass er einen Abdruck des Zeigefingers des Benutzers erfasst, wenn der Stift oder Digitalstift von dem Benutzter zum Erzeugen von Schrift berührt wird.

9. System nach Anspruch 6, das des Weiteren umfasst:
einen Prozessor, der mit dem Sensor gekoppelt und so eingerichtet ist, dass er die erfassten Fingerabdruckdaten empfängt und die erfassten Fingerabdruckdaten mit den Bezugs-Fingerabdruckdaten vergleicht.

## Revendications

1. Procédé de réalisation d'une transaction financière, le procédé comprenant :
la capture de données de référence concernant un identifiant primaire de référence pour un inscrit et la conservation de telles données dans un dossier d'enregistrement d'inscrit, un tel dossier d'enregistrement d'inscrit étant localisable par l'utilisation de l'identifiant primaire ;
la capture de données d'empreintes digitales de référence de l'inscrit et la sauvegarde des données d'empreintes digitales de référence dans le dossier d'enregistrement d'inscrit ;
la présentation d'un identifiant primaire en cours et de données d'empreintes digitales en cours à un moment ultérieur ;
la capture des données d'empreintes digitales en cours d'un client pendant que ce dernier saisit un stylo ou un stylet (2) afin de générer une écriture, le stylo ou le stylet comportant une zone de préhension (4) et un capteur d'empreintes digitales positionné dans la zone de préhension ;
la recherche dans les dossiers d'enregistrement d'inscrit d'une correspondance entre l'identifiant primaire en cours et l'identifiant primaire de référence ;
la comparaison, pour les dossiers d'enregistrement d'inscrit où l'identifiant primaire en cours correspond à l'identifiant primaire de référence, des données d'empreintes digitales en cours du client avec les données d'empreintes digitales de référence de l'inscrit dans un but de confirmation d'identité ; et
la poursuite de la réalisation de la transaction financière une fois que l'identité du client a été confirmée en comparant les données d'identifiant primaire aux données d'empreintes digitales ;
dans lequel l'identifiant primaire de référence et l'identifiant primaire en cours sont chacun une série de lettres.

2. Procédé selon la revendication 1, dans lequel les données biométriques d'empreintes digitales sont capturées en plus de l'écriture.

3. Procédé selon la revendication 1 ou 2, dans lequel le capteur d'empreintes digitales est adapté pour capturer une empreinte de pouce d'un utilisateur lorsque le pouce de l'utilisateur touche la zone de préhension (4) du stylo ou du stylet (2).

4. Procédé selon la revendication 3, dans lequel la zone de préhension (4) du stylo ou du stylet (2) est également adaptée pour capturer une empreinte digitale de l'index de l'utilisateur lorsque l'utilisateur touche le stylo ou le stylet pour générer une écriture.

5. Procédé selon la revendication 1, comprenant en outre la capture de données biométriques supplémentaires pendant que le client génère l'écriture, les données biométriques en cours étant au moins une empreinte digitale et une signature.

6. Système de réalisation de transactions commerciales, le système comprenant :
un moyen destiné à capturer des données de référence concernant un identifiant primaire de référence pour un inscrit ;
un premier capteur d'empreintes digitales pour capturer des données d'empreintes digitales de référence, les données d'empreintes digitales de référence concernant au moins une empreinte digitale de l'inscrit ;
une banque de données destinée à conserver des dossiers d'enregistrement d'inscrit, de tels dossiers d'enregistrement d'inscrit comprenant les données d'empreintes digitales de référence et l'identifiant primaire de référence, le dossier d'enregistrement d'inscrit étant localisable par l'utilisation de l'identifiant primaire ;
un moyen destiné à présenter un identifiant primaire en cours ;
un deuxième capteur d'empreintes digitales positionné dans la zone de préhension d'un stylo ou d'un stylet permettant la capture d'un ensemble en cours de données d'empreintes digitales d'un client lorsque le stylo ou le stylet est saisi pour générer une écriture, les données d'empreintes digitales en cours concernant la même empreinte digitale que l'empreinte digitale de référence ;
un dispositif d'entraînement de système destiné à rechercher dans les dossiers d'enregistrement d'inscrit une correspondance entre l'identifiant primaire en cours et l'identifiant primaire de référence, et le dispositif d'entraînement de système étant configuré pour comparer les données d'empreintes digitales en cours aux données d'empreintes digitales de référence concernant l'empreinte digitale, où l'identifiant primaire en cours correspond à l'identifiant primaire de référence ; et
un moyen destiné à traiter la transaction commerciale si le dispositif d'entraînement de système confirme l'identité du client en comparant les données d'identifiant primaire et les données d'empreintes digitales ;
dans lequel l'identifiant primaire de référence et l'identifiant primaire en cours sont chacun une série de lettres.

7. Système selon la revendication 6, comprenant en outre un troisième capteur d'empreintes digitales positionné dans la zone de préhension du stylo ou du stylet pour la capture d'une empreinte de pouce.

8. Système selon la revendication 7, dans lequel le troisième capteur d'empreintes digitales du stylo ou du stylet (2) est également adapté pour capturer une empreinte digitale de l'index de l'utilisateur lorsque l'utilisateur touche le stylo ou le stylet pour générer une écriture.

9. Système selon la revendication 6, comprenant en outre :
un processeur couplé au capteur, adapté pour recevoir les données d'empreintes digitales capturées et pour comparer les données d'empreintes digitales capturées aux données d'empreintes digitales de référence.
